(19) Europäisches Patentamt
European Patent Office
Office européen des brevets

(11) **EP 3 849 861 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **19755892.7**

(22) Anmeldetag: **15.08.2019**

(51) Internationale Patentklassifikation (IPC):
**B60T 8/17** *(2006.01)* **B60T 8/1755** *(2006.01)*

(52) Gemeinsame Patentklassifikation (CPC):
**B60T 8/1708; B60T 8/1755;** B60T 2230/06;
B60T 2270/86

(86) Internationale Anmeldenummer:
**PCT/EP2019/071946**

(87) Internationale Veröffentlichungsnummer:
**WO 2020/052904 (19.03.2020 Gazette 2020/12)**

(54) **VERFAHREN ZUM ERMITTELN EINES INSTABILEN VERHALTENS EINES ANHÄNGERS UND VERFAHREN ZUM STABILISIEREN EINES ANHÄNGERS SOWIE AUSWERTEEINHEIT UND FAHRZEUG-GESPANN**

METHOD FOR DETERMINING UNSTABLE BEHAVIOUR OF A TRAILER AND METHOD FOR STABILISING A TRAILER, AND EVALUATION UNIT AND VEHICLE COMBINATION

PROCÉDÉ POUR LA DÉTERMINATION D'UN COMPORTEMENT INSTABLE D'UNE REMORQUE ET PROCÉDÉ POUR LA STABILISATION D'UNE REMORQUE AINSI QU'UNITÉ D'ÉVALUATION ET ATTELAGE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2018 DE 102018122273**

(43) Veröffentlichungstag der Anmeldung:
**21.07.2021 Patentblatt 2021/29**

(73) Patentinhaber: **ZF CV Systems Europe BV 1170 Brussels (BE)**

(72) Erfinder:
• **PLÄHN, Klaus 30926 Seelze (DE)**
• **BIEBER, Benjamin 30900 Wedemark (DE)**

(74) Vertreter: **Rabe, Dirk-Heinrich et al ZF CV Systems Hannover GmbH Am Lindener Hafen 21 30453 Hannover (DE)**

(56) Entgegenhaltungen:
EP-A1- 3 034 373    DE-A1- 10 225 120
DE-A1- 102007 061 836    DE-A1- 102015 116 960
DE-A1- 102016 105 916    US-A1- 2014 005 918
US-A1- 2014 218 506

• **KESHAVARZ BAHAGHIGHAT M ET AL:** "Predictive yaw and lateral control in long heavy vehicles combinations", DECISION AND CONTROL (CDC), 2010 49TH IEEE CONFERENCE ON, IEEE, 15 December 2010 (2010-12-15), pages 6403 - 6408, XP031915212, ISBN: 978-1-4244-7745-6, DOI: 10.1109/ CDC.2010.5717377

EP 3 849 861 B1

**Beschreibung**

Die Erfindung betrifft ein Verfahren zum Ermitteln eines instabilen Verhaltens eines Anhängers, insbesondere eines Anhängers eines Fahrzeug-Gespanns, und ein Verfahren zum Stabilisieren eines Anhängers, eine Auswerteeinheit zur Durchführung des Verfahrens sowie ein Fahrzeug-Gespann mit mindestens einem Anhänger.

Bei einem Fahrzeug-Gespann, insbesondere Nutzfahrzeug-Gespann, kann es in gewissen Fahrsituationen dazu kommen, dass ein ziehendes Fahrzeug bzw. das Zugfahrzeug und/oder das gezogene Fahrzeug bzw. der Anhänger in eine Oszillationsbewegung bzw. Schlingerbewegung versetzt werden oder einmalig seitlich ausbrechen, wodurch kritische Fahrsituationen auftreten können. Derartige Oszillationsbewegungen bzw. ein derartiges seitliches Ausbrechen können beispielsweise während einer Kurvenfahrt, bei Ausweich- bzw. Überholvorgängen, aufgrund von Windbedingungen, oder ähnlichen auftreten. Bewegt sich das Fahrzeug-Gespann zu dem auf einem nassen oder glatten Untergrund können die Oszillationsbewegungen bzw. das Ausbrechen intensiviert werden.

Um auf derartige instabile Fahrsituationen reagieren zu können, sind Assistenzsysteme bekannt, die fahrdynamische Ist-Kenngrößen des Zugfahrzeuges auswerten und daraus auf ein Oszillationsverhalten oder ein Ausbrechen des Zugfahrzeuges schließen und entsprechend in das Fahrgeschehen eingreifen bzw. den Fahrer darüber informieren. Informationen über das Oszillationsverhalten bzw. ein seitliches Ausbrechen des Anhängers werden dabei nicht oder nur sehr ungenau berücksichtigt, da die Bewegung des Anhängers selbst nicht überwacht wird. Es ist allenfalls vorgesehen, ein Anhänger-Bremssystem anzusteuern, um beispielsweise eine Streckbremsung durchzuführen bzw. das komplette Fahrzeug-Gespann abzubremsen und demnach das Oszillationsverhalten zu minimieren oder dem Ausbrechen entgegenzusteuern. Gesteuert werden kann ein derartiger Eingriff über ein Steuergerät eines Stabilitätssystems (ESC) im Zugfahrzeug, das eine Auswerteeinheit zum Überwachen der Ist-Kenngrößen des Zugfahrzeuges aufweist.

Nachteilig hierbei ist, dass beim Ermitteln des Oszillationsverhaltens des Fahrzeug-Gespanns bzw. des seitlichen Ausbrechens des Anhängers lediglich auf fahrdynamische Ist-Kenngrößen des Zugfahrzeuges zurückgegriffen wird. Abweichungen im Fahrverhalten, die beispielsweise aufgrund von unterschiedlichen Beladungen bzw. Gewichtsverhältnissen zwischen Zugfahrzeug und Anhänger auftreten, werden dabei nicht berücksichtigt. Demnach kann beispielsweise die Situation vorliegen, dass das Zugfahrzeug viel schwerer ist als der Anhänger und dass der Anhänger ins Schlingern gerät und somit ein gewisses Oszillationsverhalten des Anhängers vorliegt und/oder dieser einmalig ausbricht. Aufgrund der unterschiedlichen Gewichtsverhältnisse überträgt sich das Oszillationsverhalten bzw. das einmalige Ausbrechen des Anhängers allerdings nicht bzw. nur sehr geringfügig auf das Zugfahrzeug, so dass dies vom Stabilitätssystem unter Umständen gar nicht, zu spät oder in zu geringem Umfang wahrgenommen wird. Dadurch können zum einen Instabilitäten im gesamten Fahrzeug-Gespann auftreten, wenn beispielsweise bei einem zu großen Oszillationsverhalten oder seitlichem Ausbrechen des Anhängers das Zugfahrzeug doch beginnt zu oszillieren oder seitlich auszubrechen, was dann aber sehr bzw. zu spät festgestellt wird. Zum anderen kann ein oszillierender oder seitlich ausbrechender Anhänger auch eine Gefahr für weitere Verkehrsteilnehmer in der Umgebung darstellen, insbesondere wenn dies nicht bemerkt und entsprechend nicht entgegengewirkt wird.

WO 2010/087022 beschreibt dazu eine Stabilitätsregelung, bei der die Zugfahrzeug-Ist-Gierrate als gemessene fahrdynamische Ist-Kenngröße des Zugfahrzeuges mit der Anhänger-Ist-Gierrate als fahrdynamischen Ist-Kenngröße des Anhängers verglichen wird. Weichen diese um einen festgelegten Grenzwert voneinander ab, so werden die Bremsen entsprechend angesteuert, um dieser Abweichung entgegenzuwirken. Nachteilig hierbei ist, dass lediglich eine Überschreitung eines Grenzwertes überwacht wird und nicht der genaue Verlauf bzw. das fahrdynamische Verhalten des Anhängers im Rahmen einer solchen Überschreitung.

Weiterhin ist in US 9,573,589 B2 eine Stabilitätsregelung für ein Fahrzeug-Gespann aus einem ziehenden Fahrzeug bzw. einem Zugfahrzeug und einem gezogenen Fahrzeug bzw. einem Anhänger beschrieben. Dabei ist vorgesehen, über ein nicht näher angegebenes Fahrzeugkombinationsmodell einen Verzögerungsfaktor zu ermitteln, der angibt, nach welcher Zeitverzögerung eine Reaktion des Anhängers aufgrund einer Lenkaktion des Zugfahrzeuges zu erwarten ist. Nach einer Messung der aktuellen Zugfahrzeug-Ist-Gierrate als gemessene fahrdynamische Ist-Kenngröße des Zugfahrzeuges kann über den Verzögerungsfaktor eine Anhänger-Soll-Gierrate bzw. Referenz-Gierrate als fahrdynamische Soll-Kenngröße des Anhängers ermittelt werden, die anhand des Fahrzeugkombinationsmodells angibt, wie der Anhänger auf die Zugfahrzeug-Ist-Gierrate aktuell reagieren sollte. Durch einen Vergleich der Referenz-Gierrate mit einer aktuellen Anhänger-Ist-Gierrate als fahrdynamische Ist-Kenngröße des Anhängers kann darauf geschlossen werden, ob ein Eingriff in die Bremsen und/oder die Lenkung des Anhängers nötig ist, um die Referenz-Gierrate einzuhalten.

Die Steuerung erfolgt dabei für jeden Anhänger separat über ein Steuergerät, das eine Gierraten-Ermittlungseinheit aufweist und in dem das Fahrzeugkombinationsmodell implementiert ist. Somit werden in jedem Anhänger die Zugfahrzeug-Ist-Gierrate bzw. die Anhänger-Ist-Gierrate sowie der Verzögerungsfaktor in einer Auswerteeinheit verarbeitet, um anschließend die Anhänger-Soll-Gierrate bzw. Referenz-Gierrate zu ermitteln und einzustellen.

Die EP 2 773 544 B1 zeigt ein vergleichbares Verfahren, bei dem statt der Gierrate die Querbeschleunigung als fahrdynamische Kenngröße betrachtet wird. Die Auswertung und Steuerung zur Einhaltung einer Referenz-Querbeschleunigung erfolgt vergleichbar zur US 9,573,589 B2 ebenfalls über einen Verzögerungsfaktor.

Auch in diesem Fall wird bewirkt, dass die Fahrdynamik des Anhängers zeitversetzt an die Fahrdynamik des Zugfahrzeuges angepasst wird, wobei angenommen wird, dass sich der Anhänger auf einen entsprechenden Eingriff in die Fahrdynamik an den Soll-Wert annähert. Wie der zeitliche Verlauf dieser Annäherung ausgestaltet ist und ob aufgrund einer derartigen Annäherung weitere Instabilitäten, z.B. durch eine entstehende Schlingerbewegung oder ein seitliches Ausbrechen, auftreten, wird nicht überwacht. Sich aufschaukelnde Oszillationsbewegungen des Anhängers oder ein seitliches Ausbrechen können dadurch unter Umständen nicht rechtzeitig erkannt werden, da bei jeder beliebigen Abweichung in Richtung des Soll-Wertes geregelt wird.

Die DE 10 2016 105 916 A1 bezieht sich allgemein auf Systeme zum Steuern von Fahrzeugparametern während der Fahrzeugführung eines Anhängers, wie z. B. bei einem Anhängerrückfahrassistenzsystem. Insbesondere werden verschiedene Systeme zum Steuern der Geschwindigkeit eines Fahrzeugs während der Verwendung eines Anhängerrückfahrassistenzsystems offenbart.

Nachteilig in den beschriebenen Verfahren ist weiterhin, dass beim Vergleich zwischen dem Ist-Zustand und dem Soll-Zustand die geometrischen Abmessungen bzw. die Art der Kopplung zwischen den Fahrzeugen des Fahrzeug-Gespanns nicht ausreichend berücksichtigt werden. Dadurch können die jeweiligen Verfahren nicht in einfacher Weise und ohne eine Anpassung auf jedes beliebige Fahrzeug-Gespann angewandt werden oder müssen bei einem neu zusammengesetzten Fahrzeug-Gespann entsprechend umprogrammiert werden.

Aufgabe der Erfindung ist daher, ein Verfahren anzugeben, mit dem ein instabiler Zustand bzw. ein instabiles Verhalten des Anhängers in einfacher Weise zuverlässig ermittelt werden kann. Weiterhin ist Aufgabe der Erfindung, ein Verfahren zum nachfolgenden Stabilisieren, insbesondere des Anhängers, eine Auswerteeinheit und ein Fahrzeug-Gespann anzugeben, mit der bzw. in dem die Verfahren ausgeführt werden können.

Diese Aufgabe wird durch ein Verfahren nach Anspruch 1 sowie ein Verfahren, eine Auswerteeinheit und ein Fahrzeug-Gespann nach den weiteren unabhängigen Ansprüchen gelöst. Die Unteransprüche geben bevorzugte Weiterbildungen an.

Erfindungsgemäß ist demnach vorgesehen, dass zunächst mindestens eine fahrdynamische Ist-Kenngröße des Anhängers ermittelt wird, wobei diese den aktuellen fahrdynamischen Zustand des Anhängers charakterisiert und diese in Abhängigkeit einer Messung über mindestens einen Sensor im Anhänger folgt. Die fahrdynamische Ist-Kenngröße folgt hierbei mittelbar oder unmittelbar aus einer Messung im Anhänger. Dabei kann auch eine fahrdynamische Kenngröße in eine andere fahrdynamische Kenngröße umgerechnet werden, um den fahrdynamischen Zustand des Anhängers zu erhalten. Weiterhin wird mindestens eine fahrdynamische Soll-Kenngröße des Anhängers ermittelt, wobei diese aus den fahrdynamischen Ist-Kenngrößen des Zugfahrzeuges durch Anwendung eines kinematischen Modells, das die Bewegung des gesamten Fahrzeug-Gespanns in Abhängigkeit von geometrischen Kenngrößen des Fahrzeug-Gespanns ausgehend vom Zugfahrzeug modelliert, folgt. Abschließend findet ein Vergleichen von mindestens einer der fahrdynamischen Ist-Kenngrößen des jeweiligen Anhängers mit der mindestens einen über das kinematische Modell ermittelten fahrdynamischen Soll-Kenngröße des jeweiligen Anhängers statt, um eine Abweichung des fahrdynamischen Anhängerverhaltens von dem über das kinematische Modell vorausgesagten Anhängerverhaltens zu ermitteln, wobei auf das Vorliegen eines instabilen Verhaltens des jeweiligen Anhängers geschlossen wird, wenn die mindestens eine fahrdynamische Ist-Kenngröße des jeweiligen Anhängers von der mindestens einen ermittelten fahrdynamischen Soll-Kenngröße des jeweiligen Anhängers um mehr als einen festgelegten Referenzwert abweicht. Somit wird festgestellt, inwieweit der Ist-Zustand mit dem Soll-Zustand noch übereinstimmt.

Dadurch kann bereits der Vorteil erreicht werden, dass zum Ermitteln eines instabilen Verhaltens auf tatsächlich im Anhänger gemessene Fahrdynamikgrößen zurückgegriffen wird. Demnach können auch Bewegungen des Anhängers erfasst werden, die nicht oder nur geringfügig oder zu spät auf das Zugfahrzeug übertragen werden und demnach durch herkömmliche Systeme, die lediglich die Kinematik des Zugfahrzeuges messen und bewerten, nicht erfasst werden oder nicht oder zu spät erfasst werden können.

Weiterhin wird zum Ermitteln des instabilen Verhaltens auch das Soll-Verhalten des Anhängers berücksichtigt, das in einfacher und zuverlässiger Weise aus dem Ist-Verhalten des Zugfahrzeuges über ein kinematisches Modell folgt. Dazu werden vorteilhafterweise die genauen Abmessungen des Fahrzeug-Gespanns, d.h. die geometrischen Kenngrößen, herangezogen, die in einem Fahrzeug-Gespann, dessen Anhänger mit einem elektronischen Bremssystem ausgestattet ist, der über einen eigenen CAN-Bus verfügt, bekannt und über die Anhängerschnittstelle gemäß ISO 11992 auf dem CAN-Bus bereitgestellt sind. Somit kann für das aktuell zusammengestellte Fahrzeug-Gespann der Unterschied zwischen einem zu erwartenden stabilen Fahrzugstand des Anhängers und einem tatsächlich vorliegen Fahrzustand des Anhängers mit guter Genauigkeit erfasst werden.

Somit werden die ohnehin im Fahrzeug z.B. über den CAN-Bus und die Anhängerschnittstelle bereitgestellten Messgrößen bzw. geometrischen Kenngrößen des Fahrzeug-Gespanns herangezogen. Dadurch sind keine weiteren Sensoren nötig und auch eine manuelle Parametrierung beim Zusammenstellen oder Ändern des Fahrzeug-Gespanns, insbesondere dem Neuankuppeln eines Anhängers, kann entfallen, da die geometrischen Daten automatisch vom Anhänger (mit elektronischem Bremssystem sowie eigenem CAN-Bus) über die Anhängerschnittstelle auf den CAN-Bus, z.B. über ISO 11992, übertragen und für das kinematische Modell herangezogen werden können. Somit kann das Verfahren in einfacher Weise auf unterschiedliche Gespanne oder auch wechselnde Fahrzeugkonfigurationen angewendet werden, ohne dass dafür Umprogrammierungen nötig sind.

Dem kinematischen Modell liegt dabei die Annahme zugrunde, dass das Fahrzeug-Gespann N-gliedrig ausgeführt ist und eines der Glieder durch das Zugfahrzeug und mindestens ein weiteres Glied durch den Anhänger ausgebildet ist, das von Zugfahrzeug mittelbar über weitere Glieder oder unmittelbar gezogen wird. Mit den geometrischen Kenngrößen kann die Kinematik des gesamten N-gliedrigen Fahrzeug-Gespanns über Bewegungsgleichungen ermittelt werden und somit auch ein von der Kinematik des Zugfahrzeuges abhängiger Soll-Zustand für den jeweiligen Anhänger in einfacher Weise extrahiert werden.

Gemäß einer bevorzugten Weiterbildung ist hierbei vorgesehen, dass zum Vergleichen eine zeitaufgelöst ermittelte Differenz zwischen der mindestens einen fahrdynamischen Ist-Kenngröße des Anhängers und der mindestens einen fahrdynamischen Soll-Kenngröße des Anhängers gebildet wird. Dadurch kann die Abweichung in einfacher Weise zeitaufgelöst ermittelt und analysiert werden, um auf einen instabilen Zustand zu schließen.

Dabei kann vorzugsweise als mindestens eine fahrdynamische Soll-Kenngröße des Anhängers eine Anhänger-Soll-Gierrate und/oder ein Anhänger-Soll-Spurversatz über das kinematische Modell ermittelt werden und als mindestens eine fahrdynamische Ist-Kenngröße des Anhängers eine Anhänger-Ist-Gierrate und/oder ein Anhänger-Ist-Spurversatz, wobei diese Kenngrößen jeweils in Abhängigkeit einer Messung über Sensoren im Anhänger ermittelt werden können. Damit kann eine Ist-Querdynamik des Anhängers ermittelt werden, aus der in einfacher Weise durch einen Vergleich mit der Soll-Querdynamik ein instabiles Verhalten hergeleitet werden kann. So kann aus einer Gierratenabweichung abgeschätzt werden, ob der Anhänger stärker giert als modelliert und/oder ob sein Spurversatz zum Zugfahrzeug höher ist als erwartet. Aus diesem Verhalten kann unter Berücksichtigung von Referenzwerten in einfacher Weise auf ein instabiles Verhalten geschlossen werden.

Vorzugsweise ist dazu vorgesehen, dass aus einer zeitlich oszillierenden Abweichung der Anhänger-Ist-Gierrate und/oder des Anhänger-Ist-Spurversatzes von der Anhänger-Soll-Gierrate und/oder dem Anhänger-Soll-Spurversatz mit mindestens einer wiederkehrenden Differenz-Gierraten-Amplitude als Referenzwert und/oder einer Differenz-Spurversatz-Amplitude als Referenzwert auf das Vorliegen eines Oszillationsverhaltens des Anhängers als instabiles Verhalten geschlossen wird. Somit wird eine zuzulassende Differenz-Amplitude als Referenzwert festgelegt, die von der jeweiligen fahrdynamischen Ist-Kenngröße im Stabilitätsfall unterschritten wird. Weicht die jeweilige fahrdynamische Ist-Kenngröße jedoch um mehr als diese festgelegte Amplitude als Referenzwert wiederholt, z.B. periodisch, ab, so wird auf ein instabilisierendes Oszillationsverhalten des Anhängers geschlossen.

Durch entsprechende Festlegung der Differenz-Amplitude als Referenzwert können vorteilhafterweise geringe oder vertretbare Oszillationen zugelassen werden, die nicht zwangsläufig zu einer Instabilität führen. Beispielsweise kann unter der Voraussetzung einer Fahrt auf einer Landstraße eine wiederkehrende Abweichung des Anhänger-Ist-Spurversatzes vom Anhänger-Soll-Spurversatz mit einem Maximal-Spurversatz von bis zu 25cm zugelassen werden, wobei bis zu dieser Abweichung eine Gefährdung von Fahrzeugen im Umfeld vermieden werden kann. Dadurch können geringe Oszillationen z.B. aufgrund von Spurrillen oder aufgrund von Mess- und Rechenungenauigkeiten zugelassen werden. Statt einem maximal zuzulassenden Spurversatz kann in Kenntnis der geometrischen Abmessungen auch ein maximal zuzulassender Knickwinkel festgelegt werden.

Gemäß einer bevorzugten Weiterbildung kann außerdem vorgesehen sein, dass aus einer einmaligen Abweichung des Anhänger-Ist-Spurversatzes von dem Anhänger-Soll-Spurversatz mit mindestens einem vorgegebenen Grenz-Differenz-Spurversatz auf ein seitliches Ausbrechen des Anhängers als instabiles Verhalten geschlossen wird. Somit kann aus dem Vergleich zwischen dem Soll-Zustand und dem Ist-Zustand in einfacher Weise auch eine Fahrsituation erkannt werden, in der ein einmaliges seitliches Ausbrechen des Anhängers zu einem instabilen Verhalten führt. Dabei ist der Grenz-Differenz-Spurversatz vorzugsweise größer als die Differenz-Spurversatz-Amplitude, so dass eine klare Unterscheidung zwischen beiden instabilen Fahrsituationen ermöglicht wird. Zudem ist zu erwarten, dass ein seitliches Ausbrechen größere Abweichungen in den Spurversätzen zwischen Zugfahrzeug und Anhänger erfordert, um einen instabilen Zustand zu erreichen.

Gemäß einer bevorzugten Weiterbildung ist weiterhin vorgesehen, dass die Anhänger-Ist-Gierrate in Abhängigkeit von über Raddrehzahlsensoren gemessenen Raddrehzahlen des Anhängers ermittelt werden. Ergänzend oder alternativ kann die Anhänger-Ist-Gierrate in Abhängigkeit einer direkten Messung der Anhänger-Ist-Gierrate über einen Gierratensensor im Anhänger ermittelt werden.

Bei einer Ermittlung über die Raddrehzahlen kann vorteilhafterweise auf die ohnehin im Anhänger vorhandenen Sensoren zurückgegriffen werden, deren Signale bei einem Anhänger mit elektronischem Bremssystem sowie eigenem CAN-Bus über die Anhängerschnittstelle gemäß ISO 11992 ins Zugfahrzeug auf den CAN-Bus übertragen werden und somit bereitgestellt sind. Aus den Raddrehzahlen lässt sich die Gierrate zuverlässig abschätzen. Um Rechenaufwand zu sparen, kann aber auch auf einen Gierratensensor im Anhänger zurückgegriffen werden, deren Signale ebenfalls über die Anhängerschnittstelle auf den CAN-Bus übertragen werden können.

Gemäß einer bevorzugten Weiterbildung ist außerdem vorgesehen, dass der Anhänger-Ist-Spurversatz aus einem Ist-Gesamtknickwinkel zwischen dem Anhänger und dem Zugfahrzeug folgt. Dabei kann der Ist-Gesamtknickwinkel vorteilhafterweise aus einer Summe aus Ist-Knickwinkeln zwischen den Gliedern des Fahrzeug-Gespanns folgen, wobei die Ist-Knickwinkel in Abhängigkeit von über Raddrehzahlsensoren im Anhänger gemessenen Raddrehzahlen des Anhängers und/oder in Abhängigkeit einer direkten Messung der Anhänger-Ist-Gierrate über einen Gierratensensor im Anhänger und in Abhängigkeit der Zugfahrzeug-Ist-Gierrate ermittelt wird. Somit kann auch für diese Ermittlung in einfacher Weise auf ohnehin im Anhänger und im Zugfahrzeug gemessene Ist-Kenngrößen zurückgegriffen werden, so dass darüber eine zuverlässige Ermittlung des Ist-Zustandes des Anhängers erfolgen kann.

Der Anhänger-Soll-Spurversatz folgt dann vorzugsweise aus einem über das kinematische Modell aus den fahrdynamischen Ist-Kenngrößen des Zugfahrzeuges modellierten Soll-Gesamtknickwinkels, wobei der Soll-Gesamtknickwinkel aus einer Summe von modellierten Soll-Knickwinkeln zwischen den Gliedern des Fahrzeug-Gespanns folgt. Somit kann auch in diesem Fall in einfacher Weise über das kinematische Modell ein Soll-Zustand abgeschätzt werden, um eine fahrdynamische Kenngröße abzuleiten, aus der ein instabiles Verhalten durch den Vergleich zwischen Ist- und Soll-Zustand extrahiert werden kann.

Gemäß einer weiteren bevorzugten Ausführungsform ist vorgesehen, dass das Ermitteln der mindestens einen fahrdynamischen Soll-Kenngröße des Anhängers durch Anwendung des kinematischen Modells und das Vergleichen der mindestens einen fahrdynamischen Ist-Kenngröße des jeweiligen Anhängers mit der über das kinematische Modell ermittelten fahrdynamischen Soll-Kenngröße des jeweiligen Anhängers im Zugfahrzeug stattfindet.

Dadurch kann die Berechnung vorteilhafterweise an einer zentralen Position im Fahrzeug-Gespann stattfinden, an der die benötigten Signale im einfacher Weise bereitgestellt werden können. Dies ist beispielsweise im Steuergerät des Stabilitätssystems des Zugfahrzeuges der Fall, das auf den CAN-Bus zugreifen kann. An diesen werden die relevanten Daten des Anhängers übermittelt, so dass keine aufwändigen Kabelwege oder zusätzliche Steuergeräte im Anhänger bereitzustellen sind. Das Verfahren kann damit ohne viel Aufwand ausgeführt werden, indem im Steuergerät beispielsweise eine erfindungsgemäße Auswerteeinheit ausgebildet wird, die das Steuergerät softwareseitig und/oder hardwareseitig erweitert und die Durchführung des erfindungsgemäßen Verfahrens ermöglicht. Vom Stabilitätssystem kann dann vorzugsweise in die Fahrdynamik des Fahrzeug-Gespanns eingegriffen werden, um einer erkannten Oszillationsbewegung oder einem Ausbrechen zu begegnen, wobei die Mittel dazu bereits vorhanden sind, da ein Stabilitätssystem automatisiert und stabilisierend in das Fahrgeschehen eingreifen kann und/oder in der Lage ist, eine Warnung an den Fahrer auszugeben.

Vorzugsweise ist dazu weiterhin vorgesehen, dass zumindest ein Teil der geometrischen Kenngrößen des Fahrzeug-Gespanns über eine Anhängerschnittstelle ins Zugfahrzeug übertragen werden, vorzugsweise gemäß ISO 11992. Dadurch sind auch keine weiteren Anpassungen vorzunehmen, da die relevanten Größen bereits bereitgestellt werden. Die Verarbeitung dieser bereitgestellten Daten ist durch das erfindungsgemäße Verfahren somit ohne viel Aufwand möglich.

Gemäß einer bevorzugten Ausführungsform ist dazu weiterhin vorgesehen, dass die mindestens eine im Anhänger gemessene fahrdynamische Ist-Kenngröße und/oder zumindest ein Teil der geometrischen Kenngrößen des Fahrzeug-Gespanns von der Anhängerschnittstelle an einen CAN-Bus im Zugfahrzeug bereitgestellt werden. Dadurch wird eine einfache Zuführung der relevanten Größen an die Auswerteeinheit ermöglicht, da diese lediglich an den CAN-Bus anzuschließen ist.

Gemäß einer bevorzugten Weiterbildung ist vorgesehen, dass die fahrdynamischen Ist-Kenngrößen des Zugfahrzeuges aus einer Messung über Sensoren im Zugfahrzeug folgen. Somit werden die Ist-Kenngrößen des Zugfahrzeuges aus denen über das kinematische Modell die Soll-Kenngrößen für den Anhänger folgen auch direkt im Zugfahrzeug gemessen und stehen der Auswerteinheit somit direkt z.B. über den CAN-Bus zur Verfügung.

Vorzugsweise ist weiterhin vorgesehen, dass als geometrische Kenngrößen des Fahrzeug-Gespanns für das kinematische Modell eine Deichsellänge des Anhängers und/oder ein Radstand des Zugfahrzeuges und/oder ein Radstand des Anhängers verwendet werden. Dadurch kann der geometrische Aufbau des Fahrzeug-Gespanns in einfacher Weise definiert werden, da diese Größen für die Kinematik des Fahrzeug-Gespanns verantwortlich sind und sich die Soll-Größen in Abhängigkeit davon für jedes Fahrzeug-Gespann auch ändern. Durch Rückgriff auf diese zur Verfügung stehenden Größen kann somit eine sehr genaue kinematische Beschreibung des Fahrzeug-Gespanns und somit eine genaue Ermittlung des fahrdynamischen Soll-Zustandes des Anhängers erfolgen.

Gemäß einer bevorzugten Weiterbildung ist demnach vorgesehen, dass die durch die fahrdynamischen Ist-Kenngrößen charakterisierte Fahrdynamik des Zugfahrzeuges durch das kinematische Modell auf den jeweiligen Anhänger unter Berücksichtigung der geometrischen Kenngrößen des Fahrzeug-Gespanns modelliert wird. Durch die Anwendung des kinematischen Modells wird somit in einfacher und zuverlässiger Weise berechnet, wie die einzelnen Glieder in Abhängigkeit der geometrischen Abmessungen und der Bewegung des Zugfahrzeuges reagieren werden, was eine genaue Ermittlung des Soll-Zustandes für das jeweilige Fahrzeug-Gespann erlaubt.

Gemäß einer bevorzugten Weiterbildung ist dazu vorgesehen, dass die Anwendung des kinematischen Modells ein zeitaufgelöstes sukzessives Lösen von Bewegungsgleichungen für jedes Glied des Fahrzeug-Gespanns beinhaltet, wobei jedes Glied einen Zugpunkt aufweist und aneinandergrenzende Glieder über die Zugpunkte drehbar miteinander verbunden sind, wobei über die Bewegungsgleichungen aus der mindestens einen fahrdynamischen Ist-Kenngröße des Zugfahrzeuges eine Gierrate des i. Gliedes des Fahrzeug-Gespanns abgeschätzt wird, wobei die mindestens eine fahrdynamische Soll-Kenngröße des jeweiligen Anhängers in Abhängigkeit der abgeschätzten Gierrate des i. Gliedes des Fahrzeug-Gespanns festgelegt wird. Die Bewegungsgleichungen berücksichtigen somit vorteilhafterweise das fahrdynamische Verhalten jedes einzelnen Gliedes, wobei vorzugsweise auch die Relativbewegung untereinander berücksichtigt wird, um den gesamten Zug und den Einfluss der Glieder untereinander modellieren zu können.

Dazu sind die die Bewegungsgleichungen vorzugsweise abhängig von den geometrischen Kenngrößen. Darüber kann in einfacher Weise die Kinematik des gesamten Zuges berechnet werden, wobei dazu die aktuelle vorliegenden Abmessungen berücksichtigt werden.

Erfindungsgemäß ist weiterhin eine Auswerteeinheit gemäß dem unabhängigen Anspruch 18, zur Durchführung des erfindungsgemäßen Verfahrens vorgesehen, wobei die Auswerteeinheit ausgebildet ist, die geometrischen Kenngrößen sowie die fahrdynamischen Ist-Kenngrößen des Zugfahrzeuges wie beschrieben einzulesen und über das kinematische Modell die mindestens eine fahrdynamische Soll-Kenngröße des jeweiligen Anhängers zu ermitteln und mit der mindestens einen fahrdynamischen Ist-Kenngröße des Anhängers zu vergleichen, und in Abhängigkeit davon auf ein instabiles Verhalten des jeweiligen Anhängers zu schließen. Somit können die Vorteile des Verfahrens durch die Auswerteeinheit, die vorzugsweise als Software und/oder Hardware in einem Steuergerät des Stabilitätssystems ausgeführt sein kann, gewährleistet werden, die ausgebildet ist, das Verfahren durchzuführen.

Diese Auswerteeinheit ist erfindungsgemäß in einem Fahrzeug-Gespann aus einem Zugfahrzeug und mindestens einem Anhänger installiert, wobei zumindest ein Teil der geometrischen Kenngrößen und die mindestens eine im Anhänger gemessene fahrdynamische Ist-Kenngröße des Anhängers über eine Anhängerschnittstelle vom Anhänger auf die Auswertevorrichtung, die sich vorteilhafterweise im Zugfahrzeug befindet, übertragen werden können zum Ermitteln eines instabilen Verhaltens des Anhängers vom Zugfahrzeug ausgehend.

Erfindungsgemäß ist weiterhin ein Verfahren zum Stabilisieren des Anhängers vorgesehen, wobei mindestens die folgenden Schritte vorgesehen sind:

- Ermitteln eines instabilen Verhaltens des mindestens einen Anhängers in dem Verfahren gemäß dem unabhängigen Anspruch 1, und
- Ansteuern eines Antriebssystems zum Reduzieren des Motormoments und/oder eines Bremssystems und/oder eines Lenksystems im Zugfahrzeug und/oder im Anhänger, wenn ein instabiles Verhalten des mindestens einen Anhängers vorliegt, zum Stabilisieren des Anhängers,
wobei das Ansteuern in Abhängigkeit der ermittelten Abweichung der mindestens einen fahrdynamischen Ist-Kenngröße des jeweiligen Anhängers von der mindestens einen ermittelten fahrdynamischen Soll-Kenngröße des jeweiligen Anhängers erfolgt, und/oder
- Ausgeben eines Warnhinweises an den Fahrer.

Somit kann gezielt auf die tatsächlich vorliegende Abweichung reagiert werden, indem zum entsprechenden Moment automatisiert durch das Stabilitätsregelsystem oder manuell durch den Fahrer bremsend eingegriffen wird, wenn diesem über den Warnhinweis mitgeteilt wird, dass eine Instabilität vorliegt, die er unter Umständen nicht bemerkt, da sich diese nicht auf das Zugfahrzeug fortpflanzt. Dazu kann vorzugsweise vorgesehen sein, dass das Antriebssystem und/oder das Bremssystem im Zugfahrzeug und/oder im Anhänger derartig angesteuert werden, dass bei einer maximalen Abweichung zwischen dem Ist-Zustand und dem Soll-Zustand eine Bremswirkung erhöht und bei einer minimalen Abweichung eine Bremswirkung reduziert wird. Dadurch können ein Oszillationsverhalten oder einseitiges Ausbrechen des Anhängers gezielt gedämpft werden.

Die Erfindung wird im Folgenden anhand von Figuren näher erläutert. Es zeigen:

Fig. 1a, 1b, 1c    unterschiedliche Ausführungen eines Fahrzeug-Gespanns;

Fig. 2    eine Detailansicht einer Vorderachse eines Anhängers gemäß den Figuren 1a, 1b; und

Fig. 3    eine Detailansicht eines Fahrzeug-Gespanns mit einem Deichselanhänger nach Fig. 1a;

Fig. 4    ein zeitlicher Verlauf einer Differenz-Gierrate bzw. eines Differenz-Spurversatzes; und

Fig. 5    ein Flussdiagramm des erfindungsgemäßen Verfahrens.

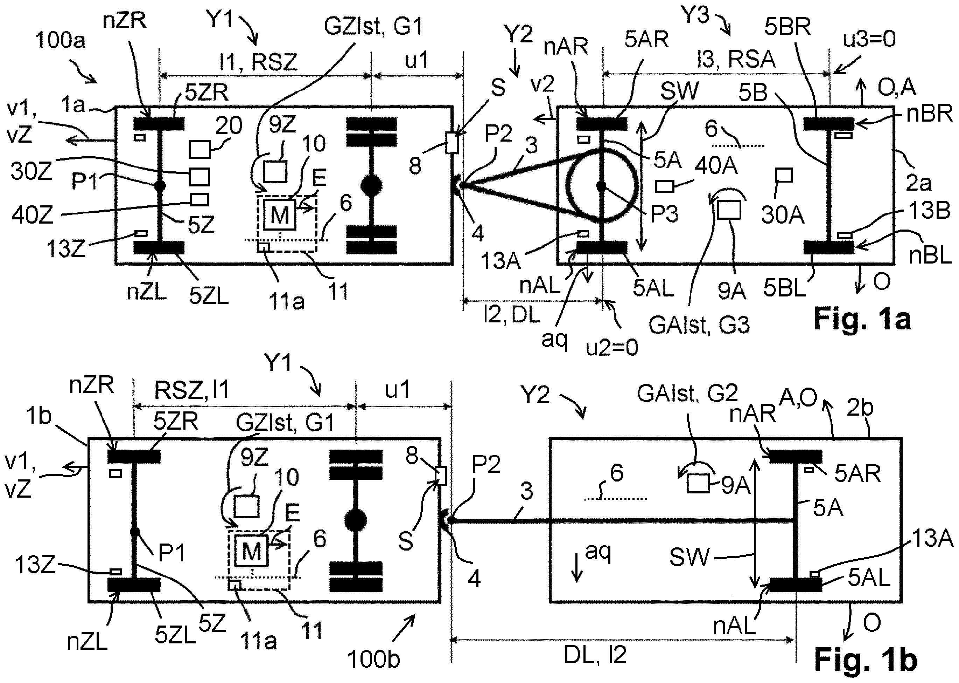

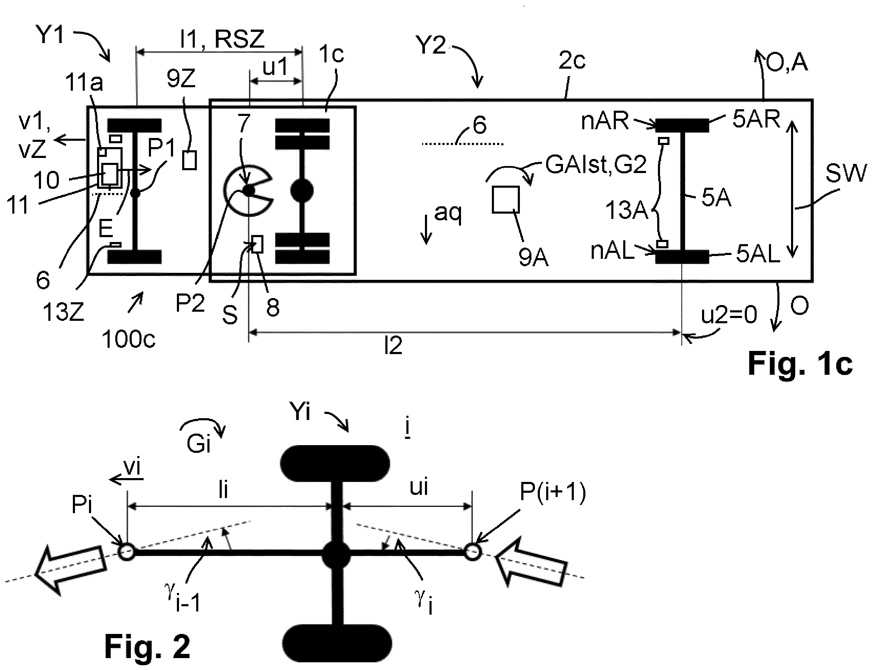

In den Figuren 1a, 1b und 1c sind unterschiedliche Ausführungen eines Fahrzeug-Gespanns 100a, 100b, 100c, insbesondere Nutzfahrzeug-Gespanns, dargestellt, wobei das jeweilige Fahrzeug-Gespann 100a, 100b, 100c aus einem Zugfahrzeug 1a, 1b, 1c (ziehendes Fahrzeug) und einem Anhänger 2a, 2b, 2c (gezogenes Fahrzeug) besteht. Das Fahrzeug-Gespann in Fig. 1a und Fig. 1b ist jeweils ein Lastzug 100a, 100b aus einem Lastkraftwagen 1a, 1b als Zugfahrzeug und einem Deichselanhänger 2a bzw. Zentralachsanhänger 2b als Anhänger und in Fig. 1c ein Sattelzug 100c aus einer Sattelzugmaschine 1c als Zugfahrzeug und einem Sattelauflieger 2c als Anhänger.

In den Fig. 1a und 1b ist der Deichselanhänger 2a bzw. Zentralachsanhänger 2b durch eine Deichsel 3 über eine Anhängerkupplung 4 mit dem Lastkraftwagen 1a, 1b verbunden. Die Deichsel 3 mit einer Deichsellänge DL ist bei der Ausführung in Fig. 1a mit einer vorderen Achse 5A des Deichselanhängers 2a über einen Drehschemel fest verbunden, wobei die vordere Achse 5A in einem dritten Zugpunkt P3 drehbar am Deichselanhänger 2a gelagert ist, so dass eine Lenkung des Deichselanhängers 2a ermöglicht wird. In Fig. 1b ist die Deichsel 3 fest mit der nicht-lenkbaren ("vorderen") Achse 5A des Zentralachsanhängers 2b verbunden. In Fig. 1c ist der Sattelauflieger 2c in einem zweiten Zugpunkt P2 über einen Kingpin 7 mit der Sattelzugmaschine 1c in gewohnter Weise schwenkbar verbunden.

Somit wird in den drei dargestellten Fahrzeug-Gespannen 100a, 100b, 100c ein Zug aus N Gliedern Yi, mit i = 1, ..., N, ausgebildet, wobei in Fig. 1a ein dreigliedriger Zug (Y1: Lastkraftwagen 1a - Y2: Deichsel 3 mit Drehschemel - Y3: Deichselanhänger 2a) und in den Figuren 1b und 1c ein zweigliedriger Zug (Y1: Lastkraftwagen 1b - Y2: Zentralachsanhänger 2b bzw. Y1: Sattelzugmaschine 1c - Y2: Sattelauflieger 2c) ausgebildet wird. Die Anzahl N der Glieder Yi eines Fahrzeug-Gespannes 100a, 100b, 100c wird dabei durch eine Anzahl k an Zugpunkten Pi definiert, wobei i = 1, ..., k und sich der erste Zugpunkt P1 wie in den Figuren ersichtlich an der vorderen Achse 5Z des jeweiligen Zugfahrzeuges 1a, 1b, 1c befindet. Als Zugpunkte Pi werden hierbei diejenigen Punkte am jeweiligen i-ten Glied Yi des Fahrzeug-Gespanns 100a, 100b, 100c verstanden, über die das jeweilige i-te Glied Yi gezogen wird. Für das Zugfahrzeug 1a, 1b, 1c wird dabei festgelegt, dass dieses an der lenkbaren vorderen Achse 5Z "gezogen" wird, da die Bewegung des Zugfahrzeuges 1a, 1b, 1c durch die Bewegung der lenkbaren vorderen Achse 5Z bestimmt ist.

Grundsätzlich ist es auch möglich, dass ein Fahrzeug-Gespann 100a, 100b, 100c mehr als drei Glieder Yi (N>3) aufweist, weil das Zugfahrzeug 1a, 1b, 1c beispielsweise mehr als einen Anhänger 2a, 2b, 2c zieht, z.B. bei Traktor-Gespannen oder bei überlangen LKWs mit mehreren Deichselanhängern 2b, 2c und/oder Dollys oder einem Sattelauf-flieger 2c mit zusätzlich angehängtem Deichselanhänger 2b, 2c und/oder mit einem Dolly.

Um für derartige N-gliedrige Fahrzeug-Gespanne 100a, 100b, 100c ein instabiles Verhalten IV, beispielsweise ein Oszillationsverhalten O oder ein einseitiges Ausbrechen A, des jeweiligen Anhängers 2a, 2b, 2c feststellen zu können, ist vorgesehen, eine fahrdynamische Ist-Kenngröße des jeweiligen Anhängers 2a, 2b, 2c zu ermitteln und diese mit einer modellierten bzw. abgeschätzten fahrdynamischen Soll-Kenngröße für den jeweiligen Anhänger 2a, 2b, 2c zu vergleichen. Anhand eines Vergleichsergebnisses E kann auf ein instabiles Verhalten IV, O, A des jeweiligen Anhängers 2a, 2b, 2c geschlossen werden. Dies wird wie folgt durchgeführt:

Zunächst werden dazu Signale S zwischen dem Anhänger 2a, 2b, 2c und dem Zugfahrzeug 1a, 1b, 1c über eine Anhänger-Schnittstelle 8 ausgetauscht. Die Signale S weisen hierbei insbesondere die im jeweiligen Anhänger 2a, 2b, 2c ermittelten fahrdynamischen Ist-Kenngrößen des jeweiligen Anhängers 2a, 2b, 2c oder damit zusammenhängende Größen auf.

Als fahrdynamische Ist-Kenngrößen des Anhängers 2a, 2b, 2c werden unter anderem Raddrehzahlen nAL, nAR der Räder 5AL, 5AR der vorderen Achse 5A und/oder Raddrehzahlen nBL, nBR der Räder 5BL, 5BR der hinteren Achse 5B (falls vorhanden) des jeweiligen Anhängers 2a, 2b, 2c verstanden. Weiterhin kann als fahrdynamische Ist-Kenngröße des jeweiligen Anhängers 2a, 2b, 2c aber auch eine Anhänger-Ist-Gierrate GAIst verstanden werden, die beispielsweise über einen Gierratensensor 9A im Anhänger 2a, 2b, 2c gemessen werden kann.

Die Anhänger-Ist-Gierrate GAIst lässt sich aber auch aus den ohnehin über Raddrehzahlsensoren 13A, 13B im Anhänger 2a, 2b, 2c gemessenen und übertragenen Raddrehzahlen nAL, nAR, nBL, nBR des Anhängers 2a, 2b, 2c bestimmen. Dazu wird angenommen, dass die Anhänger-Ist-Gierrate GAIst unter Berücksichtigung von Korrekturen aus einer Differenz der Raddrehzahlen nBL, nBR der Räder 5BL, 5BR der nicht angetriebenen, ungebremsten hinteren Achse 5B des Deichselanhängers 2a bzw. der Raddrehzahlen nAL, nAR der Räder 5AL, 5AR der nicht angetriebenen, ungebremsten vorderen Achse 5A des Zentralachsanhängers 2b bzw. des Sattelaufliegers 2c folgt, da sich diese Raddrehzahlen nAL, nAR, nBL, nBR bei einem Gieren des Anhängers 2a, 2b, 2c unterscheiden. Aus der Gleichung

$$GAIst = \frac{2\pi r(nAR, nNBR - nAL, nBL)}{SW}$$

folgt in Kenntnis einer Spurweite SW und eines Abrollradius r des jeweiligen Rades 5AR, 5BR, 5AL, 5BL, die Anhänger-Ist-Gierrate GAIst in erster Näherung. Zum Ausgleichen eines induzierten Fehlers im Abrollradius r aufgrund einer auf den Anhänger 2a, 2b, 2c wirkenden Querbeschleunigung qa beim Gieren, kann die Anhän-ger-Ist-Gierrate GAIst durch einen linearen querbeschleunigungsabhängigen Term korrigiert werden, so dass sich ergibt:

$$GAIst, korr = \frac{2\pi r\left(nAR, nNBR - nAL, nBL\right)}{SW} - C\,vz\,aq$$

mit einer in Fahrversuchen für unterschiedliche Beladungen empirisch oder analytisch ermittelbaren Konstante C, der messbaren FahrzeugGeschwindigkeit vz und der messbaren Querbeschleunigung aq. Durch eine derartige Ermittlung der Anhänger-Ist-Gierrate GAIst kann auf einen zusätzlichen Gierratensensor 9A im Anhänger 2a, 2b, 2c verzichtet werden.

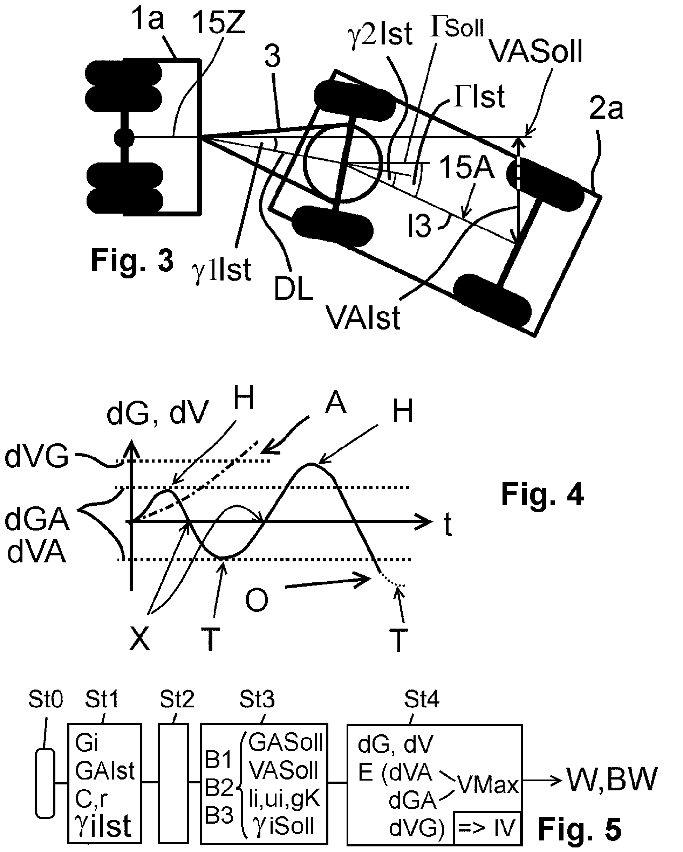

Aus den genannten Messgrößen können auch weitere fahrdynamische Ist-Kenngrößen des Anhängers 2a, 2b, 2c ermittelt werden, beispielsweise ein Anhänger-Ist-Spurversatz VAIst, der den Versatz der Spur des Anhängers 2a, 2b, 2c gegenüber der Spur des Zugfahrzeuges 1a, 1b, 1c angibt (s. Fig. 3). Die Spur des Anhängers 2a, 2b, 2c ist dabei beispielsweise durch eine Längsmittelachse 15A des Anhängers 2a, 2b, 2c und die Spur des Zugfahrzeuges 1a, 1b, 1c durch eine Längsmittelachse 15Z des Zugfahrzeuges 1a, 1b, 1c gegeben. Der Anhänger-Ist-Spurversatz VAIst lässt sich wie weiter unten beschrieben aus Ist-Knickwinkeln $\gamma$Ist ermitteln, die zwischen den einzelnen Gliedern Yi vorliegen und die aus Gierraten Gi der einzelnen Glieder Yi folgen.

Die Signalübertragung zwischen dem Anhänger 2a, 2b, 2c und dem Zugfahrzeug 1a, 1b, 1c kann beispielsweise gemäß der ISO 11992 erfolgen, wenn der jeweilige Anhänger 2a, 2b, 2c ein elektronisches Bremssystem aufweist und mit einem eigenen CAN-Bus ausgestattet ist. Nach der ISO 11992 ist vorgesehen, insbesondere die Raddrehzahlen nAL, nAR, nBL, nBR der vorderen Achse 5A bzw. der hinteren Achse 5B (falls vorhanden) des jeweiligen Anhängers 2a, 2b, 2c oder eine Differenz der Raddrehzahlen nAL, nAR, nBL, nBR einer Achse 5A, 5B über eine Anhängerschnittstelle 8 vom Anhänger 2a, 2b, 2c auf das Zugfahrzeug 1a, 1b, 1c zu übertragen und somit einem CAN-Bus 6 im Fahrzeug-Gespann 100a, 100b, 100c bereitzustellen. Auch die Raddrehzahlen nZL, nZR der lenkbaren vorderen Achse 5Z des Zugfahrzeuges 1a, 1b, 1c, die über Raddrehzahlsensoren 13Z im Zugfahrzeug 1a, 1b, 1c gemessen werden, können über den CAN-Bus 6 zur Verfügung stehen, um daraus eine Zugfahrzeug-Ist-Gierrate GZIst als fahrdynamische Ist-Kenngröße des Zugfahrzeuges 1a, 1b, 1c zu ermitteln.

Um nun aus den fahrdynamischen Ist-Kenngrößen nAL, nAR, nBL, nBR, GAIst, VAIst des Anhängers 2a, 2b, 2c auf ein instabiles Verhalten IV, O, A des Anhängers 2a, 2b, 2c schließen zu können, ist eine Soll-Fahrdynamik für den Anhänger 2a, 2b, 2c abzuschätzen und in Abhängigkeit der fahrdynamischen Ist-Kenngröße nAL, nAR, nBL, nBR, GAIst, VAIst des Anhängers 2a, 2b, 2c eine Abweichung zwischen dem Ist-Zustand und dem Soll-Zustand zu erfassen und zu bewerten. Dies erfolgt unter Rückgriff auf fahrdynamische Ist-Kenngrößen des Zugfahrzeuges 1a, 1b, 1c und unter Anwendung eines kinematischen Modells M. Als fahrdynamische Ist-Kenngröße des Zugfahrzeuges 1a, 1b, 1c werden insbesondere die Zugfahrzeug-Ist-Gierrate GZIst und eine Zugfahrzeug-Geschwindigkeit vZ verstanden, die aus den Raddrehzahlen nZR, nZL der Räder 5ZR, 5ZL des Zugfahrzeuges 1a, 1b, 1c wie für den Anhänger 2a, 2b, 2c beschrieben hervorgehen oder aber direkt über einen Gierratensensor 9Z, z.B. des Stabilitätssystems 11 (ESC), im Zugfahrzeug 1a, 1b, 1c bzw. einen Geschwindigkeitssensor gemessen und über den CAN-Bus 6 bereitgestellt werden.

Mit dem kinematischen Modell M wird aus der aktuellen Fahrdynamik des Zugfahrzeuges 1a, 1b, 1c unter Berücksichtigung der Geometrie des jeweiligen Fahrzeug-Gespanns 100a, 100b, 100c abgeschätzt, welche Fahrdynamik für den Anhänger 2a, 2b, 2c zu erwarten ist, wenn ein stabiles Fahrverhalten vorliegt. Das Fahrverhalten des Zugfahrzeuges 1a, 1b, 1c wird somit durch eine Betrachtung der stabil vorausgesetzten Bewegung (Kinematik) des N-gliedrigen Fahrzeug-Gespanns 100a, 100b, 100c auf den Anhänger 2a, 2b, 2c hochgerechnet. Dies erfolgt mithilfe der folgenden Bewegungsgleichungen B1, B2, B3, für die der Index i von 1 bis zur jeweiligen Anzahl N an Gliedern Yi des jeweiligen Fahrzeug-Gespanns 100a, 100b, 100c verläuft:

$$\gamma_i \quad = \int (G_{i+1} - G_i)\,dt \quad \text{(B1)}$$

$$G_{i+1} = \frac{v_i}{l_{i+1}}\sin(\gamma_i) - G_i\frac{u_i}{l_{i+1}}\cos(\gamma_i) \quad \text{(B2)}$$

$$v_{i+1} = v_i\cos(\gamma_i) + G_i\,u_i\sin(\gamma_i) \quad \text{(B3)}$$

In diesen Bewegungsgleichungen B1, B2, B3 bezeichnet $\gamma$i einen in Fig. 2 zwischen dem i. Glied Yi und dem i + 1. Glied Y(i+1) dargestellten Knickwinkel, Gi die Gierrate des i. Gliedes Yi, vi die Geschwindigkeit des i. Gliedes Yi, li einen Abstand zwischen dem Zugpunkt Pi des i. Gliedes Yi und der nicht-lenkbaren Achse des i. Gliedes Yi und ui einen Abstand zwischen der nicht-lenkbaren Achse des i. Gliedes Yi zum nachfolgenden Zugpunkt P(i+1). Sind zwei nicht-lenkbare Achsen vorgesehen, so ist entsprechend ein effektiver Abstand ui, li anzusetzen, der zwischen diesen beiden Achsen liegt. In der ersten Bewegungsgleichung B1 wird dabei eine Knickwinkelgeschwindigkeit betrachtet, um den Knickwinkel $\gamma i$ (s. Fig. 2) zu ermitteln. Die Knickwinkelgeschwindigkeit folgt hierbei unmittelbar aus der Differenz der Gierraten Gi zwischen dem i. Glied Yi und dem i + 1. Glied Y(i+1) und gibt somit die Relativbewegung zwischen den beiden Gliedern Yi, Y(i+1) an.

Die genannten Bewegungsgleichungen B1, B2, B3 gelten hierbei für den Soll-Zustand und den Ist-Zustand der einzelnen Glieder Yi des jeweiligen Fahrzeug-Gespanns 100a, 100b, 100c gleichermaßen. Somit können in Kenntnis der jeweiligen Variablen sowohl Ist-Werte als auch Soll-Werte für den Knickwinkel $\gamma i$ und/oder die jeweilige Gierrate Gi berechnet werden.

Der Index i, der sich auf das jeweilige Glied Yi bezieht, ist in den Ausführungen der Figuren 1a, 1b, 1c folgendermaßen definiert:

i = 1:     Y1: Zugfahrzeug 1a, 1b, 1c (alle Ausführungen);

i = 2:     Y2: Deichsel 3 mit Drehschemel (Fig. 1a), Zentralachsanhänger 2b (Fig. 1b), Sattelauflieger 2c (Fig. 1c),

i = 3     Y3: Deichselanhänger 2a (Fig. 1a)

Liegt der nachfolgende Zugpunkt P(i+1) des i. Gliedes Yi wie in Fig. 1a für die Deichsel 3 mit Drehschemel (i=2) dargestellt auf der einzigen Achse (5A) des zweiten Gliedes Y2 bzw. ist kein nachfolgender dritter Zugpunkt P3 für das dritte Glied Y3 vorhanden, so sind die Größen u2 bzw. u3 gleich Null. Entsprechend ist in Fig. 1c die Größe u3 negativ, da der nachfolgende Zugpunkt P2 des ersten Gliedes Y1 vor der nicht-lenkbaren Hinterachse des Sattelzuges 1c liegt.

In den o.g. Bewegungsgleichungen B1, B2, B3 ist die Gierrate G1 für das erste Glied Y1 (i=1), d.h. für das jeweilige Zugfahrzeug 1a, 1b, 1c bekannt bzw. kann wie oben beschrieben mit dem Gierratensensor 9Z im Zugfahrzeug 1a, 1b, 1c als Zugfahrzeug-Ist-Gierrate GZIst gemessen oder aus den Raddrehzahlen nZR, nZL des Zugfahrzeuges 1a, 1b, 1c berechnet werden. Weiterhin ist auch die Geschwindigkeit v1 für das erste Glied Y1 (i=1) durch die jeweilige Zugfahrzeug-Geschwindigkeit vZ gegeben, die direkt gemessen oder aus den Raddrehzahlen nZR, nZL des Zugfahrzeuges 1a, 1b, 1c ermittelt werden kann. Diese Größen G1 bzw. GZIst, v1 stellen somit in den obigen Formeln Messgrößen dar, die als fahrdynamische Ist-Kenngrößen des Zugfahrzeuges 1a, 1b, 1c beispielsweise über den CAN-Bus 6 übertragen werden.

Weiterhin werden über den CAN-Bus 6 aber auch geometrischen Kenngrößen gK des Fahrzeug-Gespanns 100a, 100b, 100c übertragen, aus denen für die oben beschriebenen Bewegungsgleichungen B1, B2, B3 die Parameter li und ui ermittelt werden können. Gemäß Fig. 1a ist beispielsweise I1 der Radstand RSZ des Zugfahrzeuges 1a, I2 die Deichsellänge DL und I3 der Radstand RSA des Deichselanhängers 2a. Für den Zentralachsanhänger 2b und den Sattelauflieger 2c gilt dies in entsprechender Weise. All diese Größen werden insbesondere gemäß ISO 11992 vom Anhänger 2a, 2b, 2c über die Anhängerschnittstelle 8 auf den CAN-Bus 6 im Zugfahrzeug 1a, 1b, 1c übertragen, so dass auf diese geometrischen Kenngrößen gK zurückgegriffen werden kann. Der Radstand RSZ des Zugfahrzeuges 1a, 1b, 1c ist hierbei in einem Steuergerät 11a eines Stabilitätssystems 11 (ESC) des Zugfahrzeuges 1a, 1b, 1c gespeichert. Die Deichsellänge DL und der Radstand RSA des Deichselanhängers 2a bzw. die Deichsellänge DL des Zentralachsanhängers 2b sowie weitere geometrische Kenngrößen gK des jeweiligen Fahrzeug-Gespanns 100a, 100b, 100c können über die Anhängerschnittstelle 8 vom jeweiligen Anhänger 2a, 2b, 2c bezogen und über den CAN-Bus 6 an eine zentrale Auswerteeinheit 10 im Zugfahrzeug 1a, 1b, 1c bereitgestellt werden, insofern der Anhänger 2a, 2b, 2c ein elektronisches Bremssystem mit eigenem CAN-Bus aufweist.

Für die Größen ui gilt in Fig. 1a, dass u1 gleich dem Abstand der hinteren Achse des Zugfahrzeuges 1a zum zweiten Zugpunkt P2 bzw. zu der Anhängerkupplung 4 ist, u2 für das "Deichsel-Glied" 3 Null ist, da der dritte Zugpunkt P3 in der vorderen Achse 5A liegt (s.o.) und u3 ebenfalls Null ist, da kein vierter Zugpunkt P4 vorhanden ist. Diese Variablen sind für das jeweilige Fahrzeug-Gespann 100a, 100b, 100c allesamt bekannt und können daher unmittelbar für die Berechnung verwendet werden.

Vergleichbar sind die Größen bzw. Abstände li und ui in den Fahrzeug-Gespannen 100b und 100c wie in den Figuren 1b und 1c dargestellt, festgelegt und aus den über den CAN-Bus 6 übertragenen Daten herleitbar.

Somit sind in den obigen Bewegungsgleichungen B1, B2, B3 alle Parameter bekannt, so dass diese für jeden Zeitschritt dt wiederholt berechnet werden können. Dabei wird angenommen, dass zu Beginn einer Fahrt bzw. der Berechnung ein stabiler Zustand vorliegt und somit die initialen Gierraten Gi für i>1, d.h. die Gierraten der angehängten Glieder Yi mit i>1, gleich der messbaren Gierrate G1, GZIst des Zugfahrzeuges 1a, 1b, 1c entsprechen, wobei dazu angenommen wird, dass sich das Fahrzeug-Gespann 100a, 100b, 100c über eine gewisse Strecke bereits stabil mit gewissen Knickwinkein $\gamma i$ zwischen den einzelnen Gliedern Yi bewegt hat, so dass der Anhänger 2a, 2b, 2c der stabilen Fahrt des Zugfahrzeuges 1a, 1b, 1c folgt.

Somit können die Bewegungsgleichungen B1, B2, B3 sukzessive für jeden Zeitschritt dt gelöst und darüber je nach Art des Fahrzeug-Gespanns 100a, 100b, 100c bzw. der Anzahl N der Glieder Yi im Zug die Gierrate Gi des jeweiligen i. Gliedes Yi und somit auch des jeweiligen Anhängers 2a, 2b, 2c ermittelt werden. In Fig. 1a ist demnach aus den Bewegungsgleichungen B1, B2, B3 die Gierrate G3 und in den Figuren 1b und 1c jeweils die Gierrate G2 mit dem jeweiligen geometrischen Kenngrößen ui, li für dieses Fahrzeug-Gespann 100a, 100b, 100c aus der obigen Gleichung zeitaufgelöst ermittelbar.

Diese darüber ermittelten Gierraten G3 (Fig. 1a) bzw. G2 (Fig. 1b, 1c) stellen dann modellierte bzw. abgeschätzte Anhänger-Soll-Gierraten GASoll für den jeweiligen Anhänger 2a, 2b, 2c dar, die das Soll-Verhalten des Anhängers 2a, 2b, 2c unter Annahme einer stabilen Fahrt angeben. Um nun gemäß der ursprünglichen Fragestellung ein instabiles Verhalten IV, z.B. ein Oszillationsverhalten O oder ein einmaliges seitliches Ausbrechen A des Anhängers 2a, 2b, 2c ermitteln zu können, ist der Ist-Zustand mit dem modellierten Soll-Zustand zu vergleichen, was in unterschiedlichen Varianten erfolgen kann:

Um ein Oszillationsverhalten O zu ermitteln kann in einfacher Weise zeitaufgelöst eine Differenz-Gierrate dG = GASoll - GAIst gebildet werden, die die Abweichung der tatsächlichen Anhängerbewegung von der modellierten Anhängerbewegung angibt. Weist diese Differenz-Gierrate dG wie in Fig. 4 beispielhaft dargestellt ein zeitlich oszillierendes Verhalten auf, so bewegt sich der Anhänger 2a, 2b, 2c relativ zum Zugfahrzeug 1a, 1b, 1c in einer Oszillationsbewegung, d.h. der Anhänger 2a, 2b, 2c beginnt zu schlingern. Als Vergleichsergebnis E kann somit auf das Vorliegen eines Oszillationsverhaltens O des Anhängers 2a, 2b, 2c geschlossen werden, wenn die oszillierende Differenz-Gierrate dG eine vorbestimmte Differenz-Gierraten-Amplitude dGA wiederkehrend erreicht oder überschreitet, was in Fig. 4 beispielsweise nach dem zweiten Tiefpunkt T angenommen werden kann.

Die vorbestimmte Differenz-Gierraten-Amplitude dGA wird hierbei vorzugsweise derartig gewählt, dass unkritische Oszillationen zugelassen werden. Beispielsweise kann eine Oszillation bzw. eine wiederkehrende maximale Abweichung der Anhänger-Ist-Gierrate GAIst von der modellierten Anhänger-Soll-Gierrate GASoll zugelassen werden, wenn dadurch ein Anhänger-Ist-Spurversatz VAIst um nicht mehr als einen Maximal-Spurversatz VMax von z.B. 25cm von einem Anhänger-Soll-Spurversatz VASoll unter der Annahme einer Fahrt auf einer Landstraße abweicht.

Die Ermittlung der Spurversätze VAIst, VASoll wird im Folgenden anhand von Fig. 3 beispielhaft für den Deichselanhänger 2a erläutert. In Fig. 3 wird dabei angenommen, dass sich das Zugfahrzeug 1a entlang seiner Längsmittelachse 15Z geradeaus bewegt, so dass ein Anhänger-Soll-Spurversatz VASoll, d.h. der zu erwartende Spurversatz für den Anhänger 2a, auf dieser Längsmittelachse 15Z des Zugfahrzeuges 1a liegt. Der Anhänger-Ist-Spurversatz VAIst lässt sich durch die Gleichung

$$VAIst = l3 \times \sin(\gamma 1Ist + \gamma 2Ist) + DL \times \sin(\gamma 1Ist)$$

beschreiben, wobei für die Ist-Knickwinkel $\gamma 1Ist$, $\gamma 2Ist$ jeweils die aktuellen Ist-Werte, die wie oben beschrieben aus der ersten Bewegungsgleichung B1 in Abhängigkeit der weiteren fahrdynamischen Ist-Kenngrößen nAR, nAL, nBR, nBL, GAIst, GZIst für die Deichsel 3, den Deichselanhänger 2a sowie das Zugfahrzeug 1a folgen, eingesetzt werden. Die Summe $\gamma 1Ist + \gamma 2Ist$ entspricht hierbei einem Ist-Gesamtknickwinkel $\Gamma Ist$ zwischen dem Deichselanhänger 2a und dem Zugfahrzeug 1a. Der Anhänger-Soll-Spurversatz VASoll folgt ebenfalls aus der Formel

$$VASoll = l3 \times \sin(\gamma 1Soll + \gamma 2Soll) + DL \times \sin(\gamma 1Soll),$$

wobei für die Soll-Knickwinkel $\gamma 1Soll$, $\gamma 2Soll$ nun jeweils die modellierten Soll-Werte, die aus der ersten Bewegungsgleichung B1 über das kinematisch Modell M folgen, eingesetzt werden. Die Summe $\gamma 1 Soll + \gamma 2Soll$ gibt in dem Fall entsprechend einen Soll-Gesamtknickwinkel $\Gamma Soll$ zwischen dem Deichselanhänger 2a und dem Zugfahrzeug 1a an, der in dem in Fig. 3 dargestellten Fall einer Geradeausfahrt Null entspricht.

Somit kann über die Festlegung des Maximal-Spurversatzes VMax eine sicherheitsunkritische Oszillation zugelassen bzw. hingenommen werden, die zudem unabhängig von den geometrischen Abmessungen des Fahrzeug-Gespanns 100a, 100b, 100c festgelegt werden kann und durch die eine Gefährdung des umliegenden Verkehrs vermieden wird, da ein seitliches Abweichen von 25cm eines ca. 2,5m breiten Fahrzeug-Gespanns bei einer Fahrbahnbreite von z.B. 3m möglich ist, ohne z.B. den entgegenkommenden Verkehr zu beeinträchtigen.

Alternativ kann der Anhänger-Ist-Spurversatz VAIst als fahrdynamische Ist-Kenngröße des Anhängers 2a, 2b, 2c aber auch direkt zur Ermittlung eines Oszillationsverhaltens O des Anhängers 2a, 2b, 2c herangezogen werden. Demnach kann der Anhänger-Ist-Spurversatz VAIst mit dem Anhänger-Soll-Spurversatz VASoll verglichen werden. Für den Vergleich kann beispielsweise ein Differenz-Spurversatz dV = VASoll - VAIst gebildet werden, der die Abweichung des tatsächlichen Spurversatzes vom modellierten Spurversatz angibt. Somit findet auch hier ein Vergleich zwischen einen Ist-Zustand und einem Soll-Zustand statt. Aus einem zeitlich oszillierenden Verlauf (s. Fig. 4) kann auch hier auf ein Oszillationsverhalten O des Deichselanhängers 2a geschlossen werden, wenn der oszillierende Differenz-Spurversatz dV eine Differenz-Spurversatz-Amplitude dVA überschreitet. Diese kann wie bei der Betrachtung der Differenz-Gierraten-Amplitude dVA berücksichtigen, dass eine gewisse Oszillation, beispielsweise mit weniger als einem wiederkehrenden Maximal-Spurversatz VMax des Deichselanhängers 2a von z.B. 25cm zugelassen wird.

Ergänzend oder alternativ kann aus dem Differenz-Spurversatz dV auch ein seitliches Ausbrechen A erkannt werden, wenn beispielsweise einmalig festgestellt wird, dass der Differenz-Spurversatz dV einen Grenz-Differenz-Spurversatz dVG überschreitet. Bei einem derartigen Überschreiten kann davon ausgegangen werden, dass der Anhänger 2a seitlich ausbricht, da ein Zurückkehren zum Anhänger-Soll-Spurversatz VASoll bei gleichbleibender Fahrdynamik unwahrscheinlich ist.

Somit kann jeweils durch Heranziehen der fahrdynamischen Ist-Kenngrößen des Anhängers 2a, 2b, 2c ein Ist-Zustand definiert werden und dieser mit einem aus der Bewegung des Zugfahrzeuges 1a, 1b, 1c modellierten Soll-Zustand verglichen werden. Dies erfolgt über die Bewegungsgleichungen B1, B2, B3 in Abhängigkeit einer Relativbewegung zwischen den einzelnen Gliedern Yi des Zuges, womit das zeitliche Verhalten des Zuges überwacht und daraus auf einen instabilen Zustand geschlossen werden kann.

Grundsätzlich können die obigen Betrachtungen und Bewegungsgleichungen B1, B2, B3 auch in Abhängigkeit der Querbeschleunigung statt der Gierrate durchgeführt werden, worüber sich ebenfalls die Querdynamik des Anhängers 2a, 2b, 2c beschreiben lässt. Allerdings kann aus der Gierrate eine zuverlässigere Aussage über die Stabilität des Anhängers getroffen werden.

Die soeben beschriebenen Berechnungen und Vergleiche können beispielsweise in einer Auswerteeinheit 10 im jeweiligen Zugfahrzeug 1a, 1b, 1c zentral durchgeführt werden, die Zugriff auf den CAN-Bus 6 hat. Die Auswerteeinheit 10 kann beispielsweise Teil des Steuergerätes 11a des Stabilitätssystems 11 (ESC) im Zugfahrzeug 1a, 1b, 1c sein, so dass die Funktion des Stabilitätssystems 11 erweitert wird. Dies kann durch eine Hardware und/oder eine Softwareanpassung erfolgen, durch die ein Rückgriff auf die gemäß ISO 11992 über die Anhängerschnittstelle 8 übertragenen Signale S sowie deren zusätzliche Einbeziehung bei der Auswertung gemäß dem oben beschriebenen Verfahren ermöglicht wird. Die Auswerteeinheit 10 wird somit software- und/oder hardwareseitig umgesetzt.

Als Teil des Stabilitätssystems 11 im Zugfahrzeug 1a, 1b, 1c ist die Auswerteeinheit 10 demnach ausgebildet, die Stabilität des Fahrzeug-Gespanns 100a, 100b, 100c zu bewerten. Dazu werden aus den über den CAN-Bus 6 eingelesenen geometrischen Kenngrößen gK, RSZ, RSA, DL, ... die Größen bzw. Abstände ui und li ermittelt sowie mit den übermittelten oder ermittelten fahrdynamischen Ist-Kenngrößen nAL, nAR, nBL, nBR, GAlst, VAlst des Anhängers 2a, 2b, 2c und den gemessenen fahrdynamischen Ist-Kenngrößen nZR, nZL, GZlst, vZ des Zugfahrzeuges 1a, 1b, 1c über das kinematische Modell M das Vergleichsergebnis E bestimmt, das angibt, ob eine Abweichung des Ist-Zustandes vom Soll-Zustand für den Anhänger 2a, 2b, 2c vorliegt und diese Abweichung zu einem instabilen Verhalten IV, O, A des Anhängers 2a, 2b, 2c führt.

In Abhängigkeit des Vergleichsergebnisses E bzw. des festgestellten Oszillationsverhaltens O oder des seitlichen Ausbrechens A des Anhängers 2a, 2b, 2c kann dann im Rahmen einer Assistenzfunktion eine entsprechende Aktion durchgeführt werden. Dies kann beispielsweise in Form eines Warnsignals W an den Fahrer erfolgen, so dass dieser manuell durch ein Lenkmanöver und/oder ein Bremsmanöver und/oder ein Antriebsmanöver, z.B. Reduzieren des Motormomentes, eingreifen kann. Alternativ oder ergänzend können von der Auswerteeinheit 10 bzw. dem Steuergerät 11a auch automatisierte Steuerbefehle an ein Antriebssystem 20 und/oder ein Bremssystem 30A, 30Z und/oder ein Lenksystem 40A, 40Z des Zugfahrzeuges 1a, 1b, 1c und/oder des Anhängers 2a, 2b, 2c ausgegeben werden, so dass automatisiert eingegriffen werden kann, um dem Oszillationsverhalten O bzw. dem seitlichen Ausbrechen A entgegenzuwirken. Das Antriebssystem 20, das Bremssystem 30A, 30Z sowie das Lenksystem 40A, 40Z sind der Übersichtlichkeit halber lediglich für das Fahrzeug-Gespann 100a in Fig. 1a dargestellt. Diese können aber auch in Fig. 1b und Fig. 1c in entsprechender Weise vorgesehen sein.

Der automatisierte Eingriff kann beispielsweise dadurch erfolgen, dass die Auswerteeinheit 10 und/oder das Steuergerät 11a das Antriebssystem 20 zum Reduzieren des Motormomentes und/oder das Bremssystem 30A, 30Z zum Bewirken einer Bremsung derartig ansteuern, dass das Fahrzeug-Gespann 100a, 100b, 100c gepulst abgebremst wird. Dadurch kann bei Vorliegen eines Oszillationsverhaltens O eine gepulste Streckbremsung bewirkt werden, durch die der Zug gezielt gestreckt und die Oszillationen somit reduziert werden können. Dabei kann vorgesehen sein, dass der gepulste Bremseingriff über das Antriebssystem 20 und/oder das Bremssystem 30A, 30Z in Abhängigkeit der aktuell vorliegenden Differenz-Gierrate dG und/oder des Differenz-Spurversatzes dV über eine Regelung erfolgt. Beispielsweise kann eine Bremswirkung BW über das Antriebssystem 20 und/oder das Bremssystem 30A, 30Z immer dann verstärkt werden, wenn sich die Differenz-Gierrate dG und/oder der Differenz-Spurversatz dV einem Hochpunkt H bzw. einem Tiefpunkt T nähern, während eine Reduzierung der Bremswirkung BW über das Antriebssystem 20 und/oder das Bremssystem 30A, 30Z erfolgt, wenn die Differenz-Gierrate dG und/oder der Differenz-Spurversatz dV sich einem Nulldurchlauf X annähern. Dadurch kann das Oszillationsverhalten O effizient gedämpft werden. Auch bei einem einseitigen seitlichen Ausbrechen A kann gezielt regelnd eingegriffen werden, wenn sich der Differenz-Spurversatz dV dem vorbestimmten Grenz-Differenz-Spurversatz dVG nähert, um diesem entgegenzuwirken.

Erfindungsgemäß ist gemäß Fig. 3 beispielsweise vorgesehen, nach einem Initialisierungsschritt St0 die fahrdynamischen Ist-Kenngröße nAL, nAR, nBL, nBR, GAlst (C, r), VAlst des Anhängers 2a, 2b, 2c wie oben beschrieben in einem ersten Schritt St1 zeitaufgelöst zu ermitteln, wobei diese den aktuellen fahrdynamischen Zustand des Anhängers 2a, 2b, 2c charakterisieren. Der Anhänger-Ist-Spurversatz VAIst folgt hierbei aus den gemessenen bzw. ermittelten Ist-Werten der Gierraten Gi für jedes Glied Yi des Fahrzeug-Gespanns 100a, 100b, 100c sowie den ermittelten Ist-Knickwinkeln γiIst zwischen den jeweiligen Gliedern Yi.

Anschließend werden in einem zweiten Schritt St2 die fahrdynamischen Ist-Kenngrößen nZL, nZR, GZIst, vZ des Zugfahrzeuges 1a, 1b, 1c ermittelt und in einem dritten Schritt St3 aus diesen unter Berücksichtigung des kinematischen Modells M wie beschrieben über die Bewegungsgleichungen B1, B2, B3 eine fahrdynamische Soll-Kenngröße GASoll, VZSoll für den Anhänger 2a, 2b, 2c modelliert bzw. ermittelt, wobei dies unter Berücksichtigung der geometrischen Kenngrößen gK, RSA, RSZ, DL des Fahrzeug-Gespanns 100a, 100b, 100c erfolgt, aus denen die Abstände ui, li folgen. Dabei werden aus dem kinematischen Modell M Soll-Werte für die Gierraten Gi und Soll-Knickwinkel γiSoll für die jeweiligen Glieder Yi ermittelt.

In einem vierten Schritt St4 wird ein Vergleich zwischen der fahrdynamischen Ist-Kenngröße, vorzugsweise der Anhänger-Ist-Gierrate GAIst und/oder dem Anhänger-Ist-Spurversatz VAIst, und der fahrdynamischen Soll-Kenngröße, vorzugsweise der Anhänger-Soll-Gierrate GASoll und/oder dem Anhänger-Soll-Spurversatz VASoll, durchgeführt, indem z.B. eine Differenz-Gierrate dG bzw. ein Differenz-Spurversatz dV gebildet wird. Dadurch kann die Abweichung zwischen dem vom Zugfahrzeug 1a, 1b, 1c auf den jeweiligen Anhänger 2a, 2b, 2c modellierten Verhalten und dem tatsächlichen Verhalten des jeweiligen Anhängers 2a, 2b, 2c ermittelt werden. Bei einer zeitlich oszillierenden Abweichung bzw. einer zeitlich oszillierenden Differenz dG, dV mit mindestens einer festgelegten Differenz-Amplitude dVA, dGA wird als Vergleichsergebnis E auf ein Oszillationsverhalten O und bei einem Überschreiten eines Grenz-Differenz-Spurversatzes dVG auf ein seitliches Ausbrechen A des Anhängers 2a, 2b, 2c geschlossen. Die Differenz-Amplituden dVA, dGA können hierbei unter Berücksichtigung eines zuzulassenden Maximal-Spurversatzes VMax zwischen dem Zugfahrzeug 1a, 1b, 1c und dem jeweiligen Anhänger 2a, 2b, 2c festgelegt werden.

Bei jeglichem instabilen Verhalten IV, O, A kann anschließend entsprechend ein Warnhinweis W ausgegeben werden, um einen manuellen Eingriff zu bewirken, und/oder aber automatisiert in den Fahrbetrieb eingegriffen werden, um dem instabilen Verhalten IV, O, A entgegenzuwirken, beispielsweise durch gezieltes Einstellen einer Bremswirkung BW durch Ansteuern des Antriebssystems 20 zum Reduzieren des Motormomentes und/oder des Bremssystems 30A, 30Z zum Bewirken einer Bremsung.

Bezugszeichenliste (Teil der Beschreibung)

| | |
|---|---|
| 1a, 1b | Lastkraftwagen (Zugfahrzeug von 100a, 100b) |
| 1c | Sattelzugmaschine (Zugfahrzeug von 100c) |
| 2a | Deichselanhänger |
| 2b | Zentralachsanhänger |
| 2c | Sattelauflieger |
| 3 | Deichsel mit Drehschemel |
| 4 | Anhängerkupplung |
| 5A | vordere Achse des Anhängers |
| 5AL | linkes Rad der vorderen Achse 5A |
| 5AR | rechtes Rad der vorderen Achse 5A |
| 5B | hintere Achse des Anhängers |
| 5BL | linkes Rad der hinteren Achse 5B |
| 5BR | rechtes Rad der hinteren Achse 5B |
| 5Z | vordere Achse des Zugfahrzeuges |
| 5ZL | linkes Rad der vorderen Achse 5Z |
| 5ZR | rechtes Rad der vorderen Achse 5Z |
| 6 | CAN-Bus |
| 7 | Kingpin |
| 8 | Anhängerschnittstelle |
| 9Z | Gierratensensor im Zugfahrzeug |
| 9A | Gierratensensor im Anhänger |
| 10 | Auswerteinheit |
| 11 | Stabilitätssystem (ESC) |
| 11a | Steuergerät des Stabilitätssystems |
| 13A, 13B | Raddrehzahlsensoren im Anhänger |
| 13Z | Raddrehzahlsensoren im Zugfahrzeug |

| 15A | Längsmittelachse des Anhängers |
| 15B | Längsmittelachse des Zugfahrzeuges |
| 20 | Antrieb |
| 30A | Bremssystem des Anhängers |
| 30Z | Bremssystem des Zugfahrzeuges |
| 40A | Lenksystem des Anhängers |
| 40Z | Lenksystem des Zugfahrzeuges |
| 100a, 100b | Lastzug |
| 100c | Sattelzug |

| $A$ | seitliches Ausbrechen |
| $aq$ | Querbeschleunigung |
| $B1$ | erste Bewegungsgleichung |
| $B2$ | zweite Bewegungsgleichung |
| $B3$ | dritte Bewegungsgleichung |
| $BW$ | Bremswirkung |
| $C$ | Konstante |
| $dt$ | Zeitschritt |
| $dGA$ | Differenz-Gierraten-Amplitude |
| $dG$ | Differenz-Gierrate |
| $dVA$ | Differenz-Spurversatz-Amplitude |
| $dV$ | Differenz-Spurversatz |
| $dVG$ | Grenz-Differenz-Spurversatz DL Deichsellänge |
| $E$ | Vergleichsergebnis |
| $F$ | Amplitude |
| $\gamma i$ | i. Knickwinkel |
| $\gamma i Ist$ | i. Ist-Knickwinkel |
| $\gamma i Soll$ | i. Soll-Knickwinkel |
| $\Gamma Ist$ | Ist-Gesamtknickwinkel |
| $\Gamma Soll$ | Soll-Gesamtknickwinkel |
| $GAIst$ | Anhänger-Ist-Gierrate |
| $GASoll$ | Anhänger-Soll-Gierrate |
| $GZIst$ | Zugfahrzeug-Ist-Gierrate |
| $Gi$ | Gierrate des i. Glieds Yi |
| $gK$ | geometrische Kenngröße |
| $H$ | Hochpunkt |
| $i$ | Index |
| $IV$ | instabiles Verhalten |
| $k$ | Anzahl an Zugpunkten |
| $li, ui$ | Abstände |
| $M$ | kinematisches Modell |
| $N$ | Anzahl der Glieder Yi |
| $nAL, nAR$ | Raddrehzahlen an der vorderen Achse 5A des Anhängers |
| $nBL, nBR$ | Raddrehzahlen an der hinteren Achse 5A des Anhängers nZL, nZR Raddrehzahlen am Zugfahrzeug |
| $O$ | Oszillationsverhalten |
| $Pi$ | Zugpunkt i |
| $r$ | Abrollradius des Rades |
| $RSZ$ | Radstand des Zugfahrzeuges 1a, 1b, 1c |
| $RSA$ | Radstand des Anhängers 1a, 1b, 1c |
| $S$ | Signal |
| $SW$ | Spurweite |
| $T$ | Tiefpunkt |
| $vi$ | Geschwindigkeit des i. Glieds Yi |
| $VAIst$ | Anhänger-Ist-Spurversatz |
| $VASoll$ | Anhänger-Soll-Spurversatz |
| $VMax$ | Maximal-Spurversatz |
| $vZ$ | Zugfahrzeug-Geschwindigkeit |

| W | Warnhinweis |
| X | Nulldurchlauf |
| Y.i | i. Glied |
| Y1 | erstes Glied |
| Y2 | zweites Glied |
| Y3 | drittes Glied |
| St0, St1, St2, St3, St4 | Schritte des Verfahrens |

**Patentansprüche**

1. Verfahren zum Ermitteln eines instabilen Verhaltens (IV, A, O) eines Anhängers (2a, 2b, 2c) eines Fahrzeug-Gespanns (100a, 100b, 100c), wobei das Fahrzeug-Gespann (100a, 100b, 100c) N-gliedrig ausgeführt ist und eines der Glieder (Yi, i=1,..,N) durch ein Zugfahrzeug (1a, 1b, 1c) und mindestens ein weiteres Glied (Yi) durch den Anhänger (2a, 2b, 2c) ausgebildet ist,

   wobei das instabile Verhalten (IV, A, O) des Anhängers (2a, 2b, 2c) in Abhängigkeit einer fahrdynamischen Ist-Kenngröße (nZL, nZR, GZlst, vZ) des Zugfahrzeuges (1a, 1b, 1c) ermittelt wird,
   **gekennzeichnet durch** mindestens die folgenden Schritte:

   - Ermitteln mindestens einer fahrdynamischen Ist-Kenngröße (nAL, nAR, nBL, nBR, GAlst, VAlst) des Anhängers (2a, 2b, 2c) in Form eines Ist-Spurversatzes (VAlst), wobei diese den aktuellen fahrdynamischen Zustand des Anhängers (2a, 2b, 2c) charakterisiert und in Abhängigkeit einer Messung über mindestens einen Sensor (9A, 13A) im Anhänger (2a, 2b, 2c) folgt (St1);
   - Ermitteln mindestens einer fahrdynamischen Soll-Kenngröße (GASoll, VASoll) des Anhängers (2a, 2b, 2c) (St3) in Form eines Soll-Spurversatzes (VASoll), wobei diese aus den fahrdynamischen Ist-Kenngrößen (nZL, nZR, GZlst, vZ) des Zugfahrzeuges (1a, 1b, 1c) **durch** Anwendung eines kinematischen Modells (M) in Abhängigkeit von geometrischen Kenngrößen (gK, RSA, RSZ, DL) des Fahrzeug-Gespanns (100a, 100b, 100c) folgt (St2); und
   - Vergleichen der mindestens einen fahrdynamischen Ist-Kenngröße (GAlst, VAlst) in Form des Ist-Spurversatzes (VAlst) des jeweiligen Anhängers (2a, 2b, 2c) mit der mindestens einen über das kinematische Modell (M) ermittelten fahrdynamischen Soll-Kenngröße (GASoll, VASoll) in Form des Soll-Spurversatzes (VASoll) des jeweiligen Anhängers (2a, 2b, 2c), wobei auf das Vorliegen eines instabilen Verhaltens (IV, A, O) des jeweiligen Anhängers (2a, 2b, 2c) geschlossen wird, wenn die mindestens eine fahrdynamische Ist-Kenngröße (GAlst, VAlst) in Form des Ist-Spurversatzes (VAlst) des jeweiligen Anhängers (2a, 2b, 2c) von der mindestens einen ermittelten fahrdynamischen Soll-Kenngröße (GASoll, VASoll) in Form des Soll-Spurversatzes (VASoll) des jeweiligen Anhängers (2a, 2b, 2c) um einen festgelegten Referenzwert (dVG, dVA, dGA) in Form eines Maximal-Spurversatzes (VMax) abweicht (St4);
   - Ausgeben eines Warnhinweises an den Fahrer des Fahrzeug-Gespanns, wenn die Abweichung den festgelegten Maximal-Spurversatz (VMax) überschreitet.

2. Verfahren nach Anspruch 1, **dadurch gekennzeichnet, dass** zum Vergleichen eine Differenz (dG, dV) zwischen der mindestens einen fahrdynamischen Ist-Kenngröße (GAlst, VAlst) des Anhängers (2a, 2b, 2c) und der mindestens einen fahrdynamischen Soll-Kenngröße (GASoll, GASoll) des Anhängers (2a, 2b, 2c) gebildet wird.

3. Verfahren nach Anspruch 1 oder 2, **dadurch gekennzeichnet, dass** als fahrdynamische Soll-Kenngröße des Anhängers (2a, 2b, 2c) eine Anhänger-Soll-Gierrate (GASoll) über das kinematische Modell (M) ermittelt werden und als fahrdynamische Ist-Kenngröße des Anhängers (2a, 2b, 2c) eine Anhänger-Ist-Gierrate (GAlst) in Abhängigkeit einer Messung über Sensoren (9A, 13A) im Anhänger (2a, 2b, 2c) ermittelt werden.

4. Verfahren nach Anspruch 3, **dadurch gekennzeichnet, dass** aus einer zeitlich oszillierenden Abweichung der Anhänger-Ist-Gierrate (GAlst) und/oder des Anhänger-Ist-Spurversatzes (VAlst) von der Anhänger-Soll-Gierrate (GASoll) und/oder dem Anhänger-Soll-Spurversatz (VASoll) mit mindestens einer wiederkehrenden Differenz-Gierraten-Amplitude (dGA) und/oder einer Differenz-Spurversatz-Amplitude (dVA) auf das Vorliegen eines Oszillationsverhaltens (O) des Anhängers (2a, 2b, 2c) als instabiles Verhalten (IV) geschlossen wird.

5. Verfahren nach Anspruch 4, **dadurch gekennzeichnet, dass** zur Festlegung der Differenz-Gierraten-Amplitude (dGA) und/oder einer Differenz-Spurversatz-Amplitude (dVA) ein zuzulassender Maximal-Spurversatz (VMax) von insbesondere 25cm berücksichtigt wird.

6. Verfahren nach einem der Ansprüche 3 bis 5, **dadurch gekennzeichnet, dass** aus einem einmalig von dem Anhänger-Soll-Spurversatz (VASoll) mit mindestens einem vorgegebenen Grenz-Differenz-Spurversatz (dVG) abweichenden Anhänger-Ist-Spurversatz (VAlst) auf ein seitliches Ausbrechen (A) des Anhängers (2a, 2b, 2c) als instabiles Verhalten (IV) geschlossen wird.

7. Verfahren nach einem der Ansprüche 3 bis 6, **dadurch gekennzeichnet, dass** die Anhänger-Ist-Gierrate (GAlst) in Abhängigkeit von über Raddrehzahlsensoren (13A, 13B) im Anhänger (2a, 2b, 2c) gemessenen Raddrehzahlen (nAR, nAL, nBR, nBL) des Anhängers (2a, 2b, 2c) und/oder in Abhängigkeit einer direkten Messung der Anhänger-Ist-Gierrate (GAlst) über einen Gierratensensor (9A) im Anhänger (2a, 2b, 2c) ermittelt wird.

8. Verfahren nach Anspruch 7, **dadurch gekennzeichnet, dass** die im Anhänger (2a, 2b, 2c) gemessenen Raddrehzahlen (nAR, nAL, nBR, nBL) und/oder die direkt im Anhänger (2a, 2b, 2c) gemessene Anhänger-Ist-Gierrate (GAlst) über eine Anhängerschnittstelle (8) ins Zugfahrzeug (1a, 1b, 1c) übertragen werden, vorzugsweise gemäß ISO 11992, und von der Anhängerschnittstelle (8) an einen CAN-Bus (6) im Zugfahrzeug (1a, 1b, 1c) bereitgestellt werden.

9. Verfahren nach einem der Ansprüche 3 bis 8, **dadurch gekennzeichnet, dass** der Anhänger-Ist-Spurversatz (VAlst) aus einem Ist-Gesamtknickwinkel (ΓIst) zwischen dem Anhänger (2a, 2b, 2c) und dem Zugfahrzeug (1a, 1b, 1c) folgt.

10. Verfahren nach Anspruch 9, **dadurch gekennzeichnet, dass** der Ist-Gesamtknickwinkel (ΓIst) aus einer Summe aus Ist-Knickwinkeln (γiIst) zwischen den Gliedern (Yi) des Fahrzeug-Gespanns (100a, 100b, 100c) folgt, wobei die Ist-Knickwinkel (γiIst) in Abhängigkeit von über Raddrehzahlsensoren (13A, 13B) im Anhänger (2a, 2b, 2c) gemessenen Raddrehzahlen (nAR, nAL, nBR, nBL) des Anhängers (2a, 2b, 2c) und/oder in Abhängigkeit einer direkten Messung der Anhänger-Ist-Gierrate (GAlst) über einen Gierratensensor (9A) im Anhänger (2a, 2b, 2c) und in Abhängigkeit der Zugfahrzeug-Ist-Gierrate (GZlst) ermittelt wird.

11. Verfahren nach einem der Ansprüche 3 bis 10, **dadurch gekennzeichnet, dass** der Anhänger-Soll-Spurversatz (VASoll) aus einem über das kinematische Modell (M) aus den fahrdynamischen Ist-Kenngrößen (nZL, nZR, GZlst, vZ) des Zugfahrzeuges (1a, 1b, 1c) modellierten Soll-Gesamtknickwinkels (ΓSoll) folgt, wobei der Soll-Gesamtknickwinkel (ΓSoll) aus einer Summe von modellierten Soll-Knickwinkeln (γiSoll) zwischen den Gliedern (Yi) des Fahrzeug-Gespanns (100a, 100b, 100c) folgt.

12. Verfahren nach einem der vorhergehenden Ansprüche, **dadurch gekennzeichnet, dass** das Ermitteln der mindestens einen fahrdynamischen Soll-Kenngröße (GASoll, VASoll) des Anhängers (2a, 2b, 2c) durch Anwendung des kinematischen Modells (M) und das Vergleichen der mindestens einen fahrdynamischen Ist-Kenngröße (GAlst, VAlst) des jeweiligen Anhängers (2a, 2b, 2c) mit der mindestens einen über das kinematische Modell (M) ermittelten fahrdynamischen Soll-Kenngröße (GASoll, VASoll) des jeweiligen Anhängers (2a, 2b, 2c) im Zugfahrzeug (1a, 1b, 1c) stattfindet.

13. Verfahren nach Anspruch 12, **dadurch gekennzeichnet, dass** zumindest ein Teil der geometrischen Kenngrößen (gK, RSA, DL) des Fahrzeug-Gespanns (100a, 100b, 100c) über eine Anhängerschnittstelle (8) ins Zugfahrzeug (1a, 1b, 1c) übertragen werden, vorzugsweise gemäß ISO 11992, und von der Anhängerschnittstelle (8) an einen CAN-Bus (6) im Zugfahrzeug (1a, 1b, 1c) bereitgestellt werden.

14. Verfahren nach einem der vorhergehenden Ansprüche, **dadurch gekennzeichnet, dass** als geometrische Kenngrößen (gK) des Fahrzeug-Gespanns (100a, 100b, 100c) für das kinematische Modell (M) eine Deichsellänge (DL) des Anhängers (2a, 2b) und/oder ein Radstand des Zugfahrzeuges (RSZ) und/oder ein Radstand des Anhängers (RSA) verwendet werden.

15. Verfahren nach einem der vorhergehenden Ansprüche, **dadurch gekennzeichnet, dass** die durch die fahrdynamischen Ist-Kenngrößen (nZL, nZR, GZlst, vZ) charakterisierte Fahrdynamik des Zugfahrzeuges (1a, 1b, 1c) durch das kinematische Modell (M) auf den jeweiligen Anhänger (2a, 2b, 2c) unter Berücksichtigung der geometrischen Kenngrößen (gK, RSA, RSZ, DL) des Fahrzeug-Gespanns (100a, 100b, 100c) modelliert wird.

16. Verfahren nach einem der vorhergehenden Ansprüche, **dadurch gekennzeichnet, dass** die Anwendung des kinematischen Modells (M) ein zeitaufgelöstes (dt) sukzessives Lösen von Bewegungsgleichungen (B1, B2, B3) für jedes Glied (Yi) des Fahrzeug-Gespanns (100a, 100b, 100c) beinhaltet, wobei jedes Glied (Yi) einen Zugpunkt (Pi;i=1,...,k) aufweist und aneinandergrenzende Glieder (Yi) über die Zugpunkte (Pi) drehbar miteinander verbunden sind, wobei über die Bewegungsgleichungen (B1, B2, B3) aus der mindestens einen fahrdynamischen Ist-Kenngröße (nZL, nZR, GZlst, vZ) des Zugfahrzeuges (1a, 1b, 1c) für jedes Glied (Yi) des Fahrzeug-Gespanns (100a, 100b, 100c) eine Gierrate (Gi) abgeschätzt wird und die mindestens eine fahrdynamische Soll-Kenngröße (GASoll, VASoll) des jeweiligen Anhängers (2a, 2b, 2c) in Abhängigkeit der abgeschätzten Gierraten (Gi) der Glieder (Yi) des Fahrzeug-Gespanns (100a, 100b, 100c) festgelegt wird.

17. Verfahren nach Anspruch 16, **dadurch gekennzeichnet, dass** die Bewegungsgleichungen (B1, B2, B3) abhängig sind von den geometrischen Kenngrößen (gK, RSA, RSZ, DL).

18. Auswerteeinheit (10) zur Durchführung eines Verfahrens nach einem der vorhergehenden Ansprüche, wobei die Auswerteeinheit (10) ausgebildet ist, die geometrischen Kenngrößen (gK, RSA, RSZ, DL) sowie die fahrdynamischen Ist-Kenngrößen (nZL, nZR, GZlst, vZ) des Zugfahrzeuges (1a, 1b, 1c) einzulesen und über das kinematische Modell (M) die mindestens eine fahrdynamische Soll-Kenngröße (GASoll, VASoll) in Form eines Soll-Spurversatzes (VASoll) des jeweiligen Anhängers (2a, 2b, 2c) zu ermitteln und mit der mindestens einen fahrdynamischen Ist-Kenngröße (GAlst, VAlst) in Form eines Ist-Spurversatzes (VAlst) des Anhängers (2a, 2b, 2c) zu vergleichen, und in Abhängigkeit davon auf ein instabiles Verhalten (IV, O, A) des jeweiligen Anhängers (2a, 2b, 2c) zu schließen und die Ausgabe eines Warnhinweises an den Fahrer des Fahrzeug-Gespanns zu bewirken, wenn der Vergleich ergibt, dass der Ist-Spurversatz (VAlst) des Anhängers (2a, 2b, 2c) von dem Soll-Spurversatzes (VASoll) des Anhängers (2a, 2b, 2c) um mehr als den festgelegten Maximal-Spurversatzes (VMax) abweicht (St4).

19. Auswerteeinheit (10) nach Anspruch 18, **dadurch gekennzeichnet, dass** die Auswerteeinheit (10) im Zugfahrzeug (1a, 1b, 1c) angeordnet ist, vorzugsweise in einem Steuergerät (11a) eines Stabilitätssystems (11).

20. Fahrzeug-Gespann (100a, 100b, 100c) bestehend aus einem Zugfahrzeug (1a, 1b, 1c) und mindestens einem Anhänger (2a, 2b, 2c) mit einer Auswertevorrichtung (10) nach Anspruch 18 oder 19.

21. Fahrzeug-Gespann (100a, 100b, 100c) nach Anspruch 20, **dadurch gekennzeichnet, dass** zumindest ein Teil der geometrischen Kenngrößen (gK, RSA, DL) und mindestens eine im Anhänger (2a, 2b, 2c) gemessene fahrdynamische Ist-Kenngröße (nAL, nAR, nBL, nBR, GAlst) des Anhängers (2a, 2b, 2c) über eine Anhängerschnittstelle (8) vom Anhänger (2a, 2b, 2c) auf die Auswertevorrichtung (10) im Zugfahrzeug (1a, 1b, 1c) übertragen werden können zum Ermitteln eines instabilen Verhaltens (IV, O, A) des Anhängers (2a, 2b, 2c) vom Zugfahrzeug (1) ausgehend.

22. Verfahren zum Stabilisieren eines Anhängers (2a, 2b, 2c) eines N-gliedrigen Fahrzeug-Gespanns (100a, 100b, 100c), insbesondere gemäß der Ansprüche 20 oder 21, aus einem Zugfahrzeug (1a, 1b, 1c) und mindestens einem Anhänger (2a, 2b, 2c), mit mindestens den folgenden Schritten:

  - Ermitteln eines instabilen Verhaltens (IV, A, O) des mindestens einen Anhängers (2a, 2b, 2c) in einem Verfahren gemäß einem der Ansprüche 1 bis 17, und
  - Ansteuern eines Antriebssystems (20) und/oder eines Bremssystems (30A, 30Z) und/oder eines Lenksystems (40A, 40B) im Zugfahrzeug (1a, 1b, 1c) und/oder im Anhänger (2a, 2b, 2c), wenn ein instabiles Verhalten (IV, A, O) des mindestens einen Anhängers (2a, 2b, 2c) vorliegt, zum Stabilisieren des Anhängers (2a, 2b, 2c), wobei das Ansteuern in Abhängigkeit der ermittelten Abweichung (dG, dV) der mindestens einen fahrdynamischen Ist-Kenngröße (GAlst, VAlst) in Form des Ist-Spurversatzes (VAlst) des jeweiligen Anhängers (2a, 2b, 2c) von der mindestens einen ermittelten fahrdynamischen Soll-Kenngröße (GASoll, VASoll) in Form des Soll-Spurversatzes (VASoll) des jeweiligen Anhängers (2a, 2b, 2c) erfolgt, und
  - Ausgeben eines Warnhinweises (W) an den Fahrer zum Bewirken eines manuellen Eingriffs über das Antriebssystem (20) und/oder das Bremssystem (30A, 30Z) und/oder das Lenksystem (40A, 40B) im Zugfahrzeug (1a, 1b, 1c) und/oder im Anhänger (2a, 2b, 2c), wenn der Ist-Spurversatz (VAlst) des Anhängers (2a, 2b, 2c) von dem Soll-Spurversatzes (VASoll) des Anhängers (2a, 2b, 2c) um mehr als den festgelegten Maximal-Spurversatzes (VMax) abweicht (St4).

23. Verfahren nach Anspruch 22, **dadurch gekennzeichnet, dass** das Antriebssystem (20) und/oder das Bremssystem (30A, 30Z) im Zugfahrzeug (1a, 1b, 1c) und/oder im Anhänger (2a, 2b, 2c) derart angesteuert werden, dass bei einer maximalen Abweichung (H, T) der fahrdynamischen Ist-Kenngröße (GAlst, VAlst) von der fahrdynamischen Soll-Kenngröße (GASoll, VASoll) eine Bremswirkung (BW) erhöht und bei einer minimalen Abweichung (X) eine Bremswirkung (BW) reduziert wird.

**Claims**

1. Method for determining unstable behavior (IV, A, O) of a trailer (2a, 2b, 2c) of a vehicle combination (100a, 100b, 100c), the vehicle combination (100a, 100b, 100c) being designed so as to be N-membered and one of the members (Yi, i=1,...,N) being formed by a towing vehicle (1a, 1b, 1c) and at least one further member (Yi) being formed by the trailer (2a, 2b, 2c),
the unstable behavior (IV, A, O) of the trailer (2a, 2b, 2c) being determined depending on an actual driving dynamics parameter (nZL, nZR, GZIst, vZ) of the towing vehicle (1a, 1b, 1c), **characterized by** at least the following steps:

   - determining at least one actual driving dynamics parameter (nAL, nAR, nBL, nBR, GAIst, VAIst) of the trailer (2a, 2b, 2c) in the form of an actual track offset (VAIst), the actual driving dynamics parameter characterizing the current driving dynamics state of the trailer (2a, 2b, 2c) and resulting depending on a measurement via at least one sensor (9A, 13A) in the trailer (2a, 2b, 2c) (St1);
   - determining at least one target driving dynamics parameter (GASoll, VASoll) of the trailer (2a, 2b, 2c) in the form of a target track offset (VASoll) (St3), the target driving dynamics parameter resulting from the actual driving dynamics parameters (nZL, nZR, GZIst, vZ) of the towing vehicle (1a, 1b, 1c) by applying a kinematic model (M) depending on geometric parameters (gK, RSA, RSZ, DL) of the vehicle combination (100a, 100b, 100c) (St2); and
   - comparing the at least one actual driving dynamics parameter (GAIst, VAIst) in the form of the actual track offset (VAIst) of the relevant trailer (2a, 2b, 2c) with the at least one target driving dynamics parameter (GASoll, VASoll) in the form of the target track offset (VASoll) of the relevant trailer (2a, 2b, 2c) determined via the kinematic model (M), the presence of unstable behavior (IV, A, O) of the relevant trailer (2a, 2b, 2c) being deduced if the at least one actual driving dynamics parameter (GAIst, VAIst) in the form of the actual track offset (VAIst) of the relevant trailer (2a, 2b, 2c) deviates from the at least one determined target driving dynamics parameter (GASoll, VASoll) in the form of the target track offset (VASoll) of the relevant trailer (2a, 2b, 2c) by a specified reference value (dVG, dVA, dGA) in the form of a maximum track offset (Vmax) (St4);
   - issuing a warning to the driver of the vehicle combination if the deviation exceeds the specified maximum track offset (VMax).

2. Method according to claim 1, **characterized in that,** for the comparison, a differential (dG, dV) is established between the at least one actual driving dynamics parameter (GAIst, VAIst) of the trailer (2a, 2b, 2c) and the at least one target driving dynamics parameter (GASoll, GASoll) of the trailer (2a, 2b, 2c).

3. Method according to claim 1 or claim 2, **characterized in that** a target trailer yaw rate (GASoll) is determined via the kinematic model (M) as a target driving dynamics parameter of the trailer (2a, 2b, 2c), and an actual trailer yaw rate (GAIst) is determined depending on a measurement via sensors (9A, 13A) in the trailer (2a, 2b, 2c) as an actual driving dynamics parameter of the trailer (2a, 2b, 2c),.

4. Method according to claim 3, **characterized in that** from a temporally oscillating deviation of the actual trailer yaw rate (GAIst) and/or of the actual trailer track offset (VAIst) from the target trailer yaw rate (GASoll) and/or the target trailer track offset (VASoll) by at least one recurring differential yaw rate amplitude (dGA) and/or by one differential track offset amplitude (dVA), the presence of oscillation behavior (O) of the trailer (2a, 2b, 2c) as unstable behavior (IV) is deduced.

5. Method according to claim 4, **characterized in that** in order to specify the differential yaw rate amplitude (dGA) and/or a differential track offset amplitude (dVA), a permissible maximum track offset (VMax) of in particular 25 cm is taken into account.

6. Method according to any of claims 3 to 5, **characterized in that** from an actual trailer track offset (VAIst) which deviates non-recurrently from the target trailer track offset (VASoll) by at least one predetermined limit differential track offset (dVG), a lateral breakaway (A) of the trailer (2a, 2b, 2c) as unstable behavior (IV) is deduced.

7. Method according to any of claims 3 to 6, **characterized in that** the actual trailer yaw rate (GAIst) is determined depending on wheel speeds (nAR, nAL, nBR, nBL) of the trailer (2a, 2b, 2c) measured via wheel speed sensors (13A, 13B) in the trailer (2a, 2b, 2c) and/or depending on a direct measurement of the actual trailer yaw rate (GAIst) via a yaw rate sensor (9A) in the trailer (2a, 2b, 2c).

8. Method according to claim 7, **characterized in that** the wheel speeds (nAR, nAL, nBR, nBL) measured in the trailer (2a, 2b, 2c) and/or the actual trailer yaw rate (GAIst) measured directly in the trailer (2a, 2b, 2c) are transmitted to the towing vehicle (1a, 1b, 1c) via a trailer interface (8), preferably in accordance with ISO 11992, and are provided by the trailer interface (8) to a CAN bus (6) in the towing vehicle (1a, 1b, 1c).

9. Method according to any of claims 3 to 8, **characterized in that** the actual trailer track offset (VAIst) results from an actual total articulation angle ($\Gamma$Ist) between the trailer (2a, 2b, 2c) and the towing vehicle (1a, 1b, 1c).

10. Method according to claim 9, **characterized in that** the actual total articulation angle ($\Gamma$Ist) results from a sum of actual articulation angles ($\gamma$iIst) between the members (Yi) of the vehicle combination (100a, 100b, 100c), the actual articulation angle ($\gamma$iIst) being determined depending on wheel speeds (nAR, nAL, nBR, nBL) of the trailer (2a, 2b, 2c) measured via wheel speed sensors (13A, 13B) in the trailer (2a, 2b, 2c) and/or depending on a direct measurement of the actual trailer yaw rate (GAIst) via a yaw rate sensor (9A) in the trailer (2a, 2b, 2c) and depending on the actual towing vehicle yaw rate (GZIst).

11. Method according to any of claims 3 to 10, **characterized in that** the target trailer track offset (VASoll) results from a target total articulation angle ($\Gamma$Soll) modeled via the kinematic model (M) from the actual driving dynamics parameters (nZL, nZR, GZIst, vZ) of the towing vehicle (1a, 1b, 1c), the target total articulation angle ($\Gamma$Soll) resulting from a sum of modeled target articulation angles ($\gamma$iSoll) between the members (Yi) of the vehicle combination (100a, 100b, 100c).

12. Method according to any of the preceding claims, **characterized in that** the determination of the at least one target driving dynamics parameter (GASoll, VASoll) of the trailer (2a, 2b, 2c) by applying the kinematic model (M) and the comparison of the at least one actual driving dynamics parameter (GAIst, VAIst) of the relevant trailer (2a, 2b, 2c) with the at least one target driving dynamics parameter (GASoll, VASoll) of the relevant trailer (2a, 2b, 2c) determined via the kinematic model (M) takes place in the towing vehicle (1a, 1b, 1c).

13. Method according to claim 12, **characterized in that** at least some of the geometric parameters (gK, RSA, DL) of the vehicle combination (100a, 100b, 100c) are transmitted to the towing vehicle (1a, 1b, 1c) via a trailer interface (8), preferably in accordance with ISO 11992, and are provided by the trailer interface (8) to a CAN bus (6) in the towing vehicle (1a, 1b, 1c).

14. Method according to any of the preceding claims, **characterized in that** a drawbar length (DL) of the trailer (2a, 2b) and/or a wheelbase of the towing vehicle (RSZ) and/or a wheelbase of the trailer (RSA) are used as geometric parameters (gK) of the vehicle combination (100a, 100b, 100c) for the kinematic model (M).

15. Method according to any of the preceding claims, **characterized in that** the driving dynamics of the towing vehicle (1a, 1b, 1c) which are **characterized by** the actual driving dynamics parameters (nZL, nZR, GZIst, vZ) are modeled by the kinematic model (M) on the relevant trailer (2a, 2b, 2c), taking into account the geometric parameters (gK, RSA, RSZ, DL) of the vehicle combination (100a, 100b, 100c).

16. Method according to any of the preceding claims, **characterized in that** the application of the kinematic model (M) includes a time-resolved (dt) successive solution of motion equations (B1, B2, B3) for each member (Yi) of the vehicle combination (100a, 100b, 100c), each member (Yi) having a tow point (Pi;i=1,... ,k) and adjacent members (Yi) being rotatably connected to one another via the tow points (Pi), a yaw rate (Gi) being estimated for each member (Yi) of the vehicle combination (100a, 100b, 100c)from the at least one actual driving dynamics parameter (nZL, nZR, GZIst, vZ) of the towing vehicle (1a, 1b, 1c) via the motion equations (B1, B2, B3) and the at least one target driving dynamics parameter (GASoll, VASoll) of the relevant trailer (2a, 2b, 2c) being specified depending on the estimated yaw rates (Gi) of the members (Yi) of the vehicle combination (100a, 100b, 100c).

17. Method according to claim 16, **characterized in that the** motion equations (B1, B2, B3) depend on the geometric parameters (gK, RSA, RSZ, DL).

18. Evaluation unit (10) for carrying out a method according to any of the preceding claims, the evaluation unit (10) being designed to read in the geometric parameters (gK, RSA, RSZ, DL) and the actual driving dynamics parameters (nZL, nZR, GZIst, vZ) of the towing vehicle (1a, 1b, 1c) and to determine the at least one target driving dynamics parameter (GASoll, VASoll) in the form of a target track offset (VASoll) of the relevant trailer (2a, 2b, 2c) via the kinematic model (M) and to compare the at least one target driving dynamics parameter with the at least one actual driving dynamics parameter (GAIst, VAIst) in the form of an actual track offset (VAIst) of the trailer (2a, 2b, 2c), and, depending thereon, to deduce unstable behavior (IV, O, A) of the relevant trailer (2a, 2b, 2c) and to issue a warning to the driver of the vehicle combination if the comparison shows that the actual track offset (VAIst) of the trailer (2a, 2b, 2c) deviates from the target track offset (VASoll) of the trailer (2a, 2b, 2c) by more than the specified maximum track offset (VMax) (St4).

19. Evaluation unit (10) according to claim 18, **characterized in that** the evaluation unit (10) is arranged in the towing vehicle (1a, 1b, 1c), preferably in a control unit (11a) of a stability system (11).

20. Vehicle combination (100a, 100b, 100c) consisting of a towing vehicle (1a, 1b, 1c) and at least one trailer (2a, 2b, 2c), the combination comprising an evaluation device (10) according to claim 18 or claim 19.

21. Vehicle combination (100a, 100b, 100c) according to claim 20,
    **characterized in that** at least some of the geometric parameters (gK, RSA, DL) and at least one actual driving dynamics parameter (nAL, nAR, nBL, nBR, GAIst) of the trailer (2a, 2b, 2c) measured in the trailer (2a, 2b, 2c) can be transmitted from the trailer (2a, 2b, 2c) to the evaluation device (10) in the towing vehicle (1a, 1b, 1c) via a trailer interface (8) in order to determine unstable behavior (IV, O, A) of the trailer (2a, 2b, 2c) starting from the towing vehicle (1).

22. Method for stabilizing a trailer (2a, 2b, 2c) of an N-membered vehicle combination (100a, 100b, 100c), in particular according to claim 20 or claim 21, consisting of a towing vehicle (1a, 1b, 1c) and at least one trailer (2a, 2b, 2c), the method comprising at least the following steps:

    - determining unstable behavior (IV, A, O) of the at least one trailer (2a, 2b, 2c) in a method according to any of claims 1 to 17, and
    - controlling a drive system (20) and/or a braking system (30A, 30Z) and/or a steering system (40A, 40B) in the towing vehicle (1a, 1b, 1c) and/or in the trailer (2a, 2b, 2c) when there is unstable behavior (IV, A, O) of the at least one trailer (2a, 2b, 2c) in order to stabilize the trailer (2a, 2b, 2c),
    the control being carried out depending on the determined deviation (dG, dV) of the at least one actual driving dynamics parameter (GAIst, VAIst) in the form of the actual track offset (VAIst) of the relevant trailer (2a, 2b, 2c) from the at least one determined target driving dynamics parameter (GASoll, VASoll) in the form of the target track offset (VASoll) of the relevant trailer (2a, 2b, 2c), and
    - issuing a warning (W) to the driver in order to effect manual intervention via the drive system (20) and/or the braking system (30A, 30Z) and/or the steering system (40A, 40B) in the towing vehicle (1a, 1b, 1c) and/or in the trailer (2a, 2b, 2c) if the actual track offset (VAIst) of the trailer (2a, 2b, 2c) deviates from the target track offset (VASoll) of the trailer (2a, 2b, 2c) by more than the specified maximum track offset (VMax) (St4).

23. Method according to claim 22, **characterized in that** the drive system (20) and/or the braking system (30A, 30Z) in the towing vehicle (1a, 1b, 1c) and/or in the trailer (2a, 2b, 2c) are controlled in such a way that in the case of a maximum deviation (H, T) of the actual driving dynamics parameter (GAIst, VAIst) from the target driving dynamics parameter (GASoll, VASoll), a braking effect (BW) is increased and in the case of a minimum deviation (X), a braking effect (BW) is reduced.

**Revendications**

1. Procédé permettant de déterminer un comportement instable (IV, A, O) d'une remorque (2a, 2b, 2c) d'un attelage de véhicules (100a, 100b, 100c), dans lequel l'attelage de véhicules (100a, 100b, 100c) est réalisé avec N éléments et l'un des éléments (Yi, i=1, ..., N) est formé par un véhicule tracteur (1a, 1b, 1c) et au moins un autre élément (Yi) par la remorque (2a, 2b, 2c),
   dans lequel le comportement instable (IV, A, O) de la remorque (2a, 2b, 2c) est déterminé en fonction d'une grandeur caractéristique réelle (nZL, nZR, GZIst, vZ) de dynamique de conduite du véhicule tracteur (1a, 1b, 1c), **caractérisé par** au moins les étapes suivantes :

    - détermination d'au moins une grandeur caractéristique réelle (nAL, nAR, nBL, nBR, GAIst, VAIst) de dynamique de conduite de la remorque (2a, 2b, 2c) sous la forme d'un déport réel (VAIst), dans lequel cette grandeur caractéristique réelle caractérise l'état actuel de dynamique de conduite de la remorque (2a, 2b, 2c) et est le résultat (St1) d'une mesure par l'intermédiaire d'au moins un capteur (9A, 13A) dans la remorque (2a, 2b, 2c) ;
    - détermination d'au moins une grandeur caractéristique de consigne (GASoll, VASoll) de dynamique de conduite de la remorque (2a, 2b, 2c) (St3) sous la forme d'un déport de consigne (VASoll), dans lequel cette grandeur

**19**

caractéristique de consigne résulte (St2) des grandeurs caractéristiques réelles (nZL, nZR, GZIst, vZ) de dynamique de conduite du véhicule tracteur (1a, 1b, 1c) par application d'un modèle (M) cinématique en fonction de grandeurs caractéristiques géométriques (gK, RSA, RSZ, DL) de l'attelage de véhicules (100a, 100b, 100c) ; et

- comparaison de l'au moins une grandeur caractéristique réelle (GAIst, VAIst) de dynamique de conduite sous la forme du déport réel (VAIst) de la remorque (2a, 2b, 2c) respective avec l'au moins une grandeur caractéristique de consigne (GASoll, VASoll) de dynamique de conduite sous la forme du déport de consigne (VASoll) de la remorque (2a, 2b, 2c) respective, laquelle grandeur caractéristique de consigne est déterminée par l'intermédiaire du modèle (M) cinématique, dans lequel la présence d'un comportement instable (IV, A, O) de la remorque (2a, 2b, 2c) respective est conclue lorsque l'au moins une grandeur caractéristique réelle (GAIst, VAIst) de dynamique de conduite sous la forme du déport réel (VAIst) de la remorque (2a, 2b, 2c) respective s'écarte (St4) de l'au moins une grandeur caractéristique de consigne (GASoll, VASoll) de dynamique de conduite déterminée sous la forme du déport de consigne (VASoll) de la remorque (2a, 2b, 2c) respective d'une valeur de référence (dVG, dVA, dGA) définie sous la forme d'un déport maximal (VMax) ;

- émission d'un avertissement au conducteur de l'attelage de véhicules lorsque l'écart dépasse le déport maximal (VMax) défini.

2. Procédé selon la revendication 1, **caractérisé en ce que,** pour la comparaison, une différence (dG, dV) est formée entre l'au moins une grandeur caractéristique réelle (GAIst, VAIst) de dynamique de conduite de la remorque (2a, 2b, 2c) et l'au moins une grandeur caractéristique de consigne (GASoll, GASoll) de dynamique de conduite de la remorque (2a, 2b, 2c).

3. Procédé selon la revendication 1 ou 2, **caractérisé en ce que,** comme grandeur caractéristique de consigne de dynamique de conduite de la remorque (2a, 2b, 2c), un taux de lacet de consigne de remorque (GASoll) est déterminé par l'intermédiaire du modèle (M) cinématique et, comme grandeur caractéristique réelle de dynamique de conduite de la remorque (2a, 2b, 2c), un taux de lacet réel de remorque (GAIst) est déterminé en fonction d'une mesure par l'intermédiaire de capteurs (9A, 13A) dans la remorque (2a, 2b, 2c).

4. Procédé selon la revendication 3, **caractérisé en ce que** la présence d'un comportement d'oscillation (O) de la remorque (2a, 2b, 2c) est conclue comme comportement instable (IV) à partir d'un écart oscillant dans le temps du taux de lacet réel de remorque (GAIst) et/ou du déport réel de remorque (VAIst) du taux de lacet de consigne de remorque (GASoll) et/ou du déport de consigne de remorque (VASoll) avec au moins une amplitude de taux de lacet différentiel (dGA) récurrent et/ou une amplitude de déport différentiel (dVA).

5. Procédé selon la revendication 4, **caractérisé en ce qu'**un déport maximal (VMax) à autoriser, en particulier de 25 cm, est pris en compte pour définir l'amplitude de taux de lacet différentiel (dGA) et/ou une amplitude de déport différentielle (dVA).

6. Procédé selon l'une des revendications 3 à 5, **caractérisé en ce que** l'on conclut à un dérapage (A) latéral de la remorque (2a, 2b, 2c) comme comportement instable (IV) à partir d'un déport réel de remorque (VAIst) s'écartant une fois du déport de consigne de remorque (VASoll) avec au moins un déport différentiel limite (dVG) prédéfini.

7. Procédé selon l'une des revendications 3 à 6, **caractérisé en ce que** le taux de lacet réel de remorque (GAIst) est déterminé en fonction des vitesses de rotation de roues (nAR, nAL, nBR, nBL) de la remorque (2a, 2b, 2c), lesquelles vitesses de rotation de roues sont mesurées par l'intermédiaire de capteurs de vitesses de rotation de roues (13A, 13B) dans la remorque (2a, 2b, 2c), et/ou en fonction d'une mesure directe du taux de lacet réel de remorque (GAIst) par l'intermédiaire d'un capteur de taux de lacet (9A) dans la remorque (2a, 2b, 2c).

8. Procédé selon la revendication 7, **caractérisé en ce que** les vitesses de rotation de roues (nAR, nAL, nBR, nBL) mesurées dans la remorque (2a, 2b, 2c) et/ou le taux de lacet réel de remorque (GAIst) mesuré directement dans la remorque (2a, 2b, 2c) sont transmis au véhicule tracteur (1a, 1b, 1c) par l'intermédiaire d'une interface de remorque (8), de préférence conformément à ISO 11992, et sont mis à disposition par l'interface de remorque (8) à un bus CAN (6) dans le véhicule tracteur (1a, 1b, 1c).

9. Procédé selon l'une des revendications 3 à 8, **caractérisé en ce que** le déport réel de remorque (VAIst) résulte d'un angle d'articulation total réel (ΓIst) entre la remorque (2a, 2b, 2c) et le véhicule tracteur (1a, 1b, 1c).

10. Procédé selon la revendication 9, **caractérisé en ce que** l'angle d'articulation total réel (ΓIst) résulte d'une somme d'angles d'articulation réels (γiIst) entre les éléments (Yi) de l'attelage de véhicules (100a, 100b, 100c), dans lequel les angles d'articulation réels (γiIst) sont déterminés en fonction des vitesses de rotation de roues (nAR, nAL, nBR, nBL) de la remorque (2a, 2b, 2c), lesquelles vitesses de rotation de roues sont mesurées par l'intermédiaire de capteurs de vitesses de rotation de roues (13A, 13B) dans la remorque (2a, 2b, 2c), et/ou en fonction d'une mesure directe du taux de lacet réel de remorque (GAIst) par l'intermédiaire d'un capteur de taux de lacet (9A) dans la remorque (2a, 2b, 2c) et en fonction du taux de lacet réel de véhicule tracteur (GZIst).

11. Procédé selon l'une des revendications 3 à 10, **caractérisé en ce que** le déport de consigne de remorque (VASoll) résulte d'un angle d'articulation total de consigne (ΓSoll) modélisé par l'intermédiaire du modèle (M) cinématique à partir des grandeurs caractéristiques réelles (nZL, nZR, GZIst, vZ) de dynamique de conduite du véhicule tracteur (1a, 1b, 1c), dans lequel l'angle d'articulation total de consigne (ΓSoll) résulte d'une somme d'angles d'articulation de consigne (γiSoll) modélisés entre les éléments (Yi) de l'attelage de véhicules (100a, 100b, 100c).

12. Procédé selon l'une des revendications précédentes, **caractérisé en ce que** la détermination de l'au moins une grandeur caractéristique de consigne (GASoll, VASoll) de dynamique de conduite de la remorque (2a, 2b, 2c) se fait par application du modèle (M) cinématique et par la comparaison de l'au moins une grandeur caractéristique réelle (GAIst, VAIst) de dynamique de conduite de la remorque (2a, 2b, 2c) respective avec l'au moins une grandeur caractéristique de consigne (GASoll, VASoll) de dynamique de conduite de la remorque (2a, 2b, 2c) respective dans le véhicule tracteur (1a, 1b, 1c), laquelle grandeur caractéristique de consigne est déterminée par le modèle (M) cinématique.

13. Procédé selon la revendication 12, **caractérisé en ce qu'**au moins une partie des grandeurs caractéristiques géométriques (gK, RSA, DL) de l'attelage de véhicules (100a, 100b, 100c) est transmise au véhicule tracteur (1a, 1b, 1c) par l'intermédiaire d'une interface de remorque (8), de préférence conformément à ISO 11992, et est mise à disposition par l'interface de remorque (8) à un bus CAN (6) dans le véhicule tracteur (1a, 1b, 1c).

14. Procédé selon l'une des revendications précédentes, **caractérisé en ce qu'**une longueur de timon (DL) de la remorque (2a, 2b) et/ou un empattement du véhicule tracteur (RSZ) et/ou un empattement de la remorque (RSA) sont utilisés comme grandeurs caractéristiques géométriques (gK) de l'attelage de véhicules (100a, 100b, 100c) pour le modèle (M) cinématique.

15. Procédé selon l'une des revendications précédentes,
**caractérisé en ce que** la dynamique de conduite du véhicule tracteur (1a, 1b, 1c) **caractérisée par** les grandeurs caractéristiques réelles (nZL, nZR, GZIst, vZ) de dynamique de conduite est modélisée par le modèle (M) cinématique sur la remorque (2a, 2b, 2c) respective en prenant en compte les grandeurs caractéristiques géométriques (gK, RSA, RSZ, DL) de l'attelage de véhicules (100a, 100b, 100c).

16. Procédé selon l'une des revendications précédentes,
**caractérisé en ce que** l'application du modèle (M) cinématique implique une résolution successive, résolue dans le temps (dt), d'équations de mouvement (B1, B2, B3) pour chaque élément (Yi) de l'attelage de véhicules (100a, 100b, 100c), dans lequel chaque élément (Yi) présente un point de traction (Pi ; i=1, ..., k) et des éléments (Yi) contigus sont reliés entre eux de manière rotative par l'intermédiaire des points de traction (Pi), dans lequel un taux de lacet (Gi) est estimé, par l'intermédiaire des équations de mouvement (B1, B2, B3), à partir de l'au moins une grandeur caractéristique réelle (nZL, nZR, GZIst, vZ) de dynamique de conduite du véhicule tracteur (1a, 1b, 1c) pour chaque élément (Yi) de l'attelage de véhicules (100a, 100b, 100c), et l'au moins une grandeur caractéristique de consigne (GASoll, VASoll) de dynamique de conduite de la remorque (2a, 2b, 2c) respective est définie en fonction des taux de lacet (Gi) estimés des éléments (Yi) de l'attelage de véhicules (100a, 100b, 100c).

17. Procédé selon la revendication 16, **caractérisé en ce que** les équations de mouvement (B1, B2, B3) dépendent des grandeurs caractéristiques géométriques (gK, RSA, RSZ, DL).

18. Unité d'évaluation (10) pour la mise en œuvre d'un procédé selon l'une des revendications précédentes, dans laquelle l'unité d'évaluation (10) est conçue pour lire les grandeurs caractéristiques géométriques (gK, RSA, RSZ, DL) ainsi que les grandeurs caractéristiques réelles (nZL, nZR, GZIst, vZ) de dynamique de conduite du véhicule tracteur (1a, 1b, 1c) et pour déterminer, par l'intermédiaire du modèle (M) cinématique, l'au moins une grandeur caractéristique de consigne (GASoll, VASoll) de dynamique de conduite sous la forme d'un déport de consigne (VASoll) de la remorque (2a, 2b, 2c) respective et la comparer avec l'au moins une grandeur caractéristique réelle (GAIst, VAIst) dynamique de conduite sous la forme d'un déport réel (VAIst) de la remorque (2a, 2b, 2c) et, en fonction de cela, pour conclure à un comportement instable (IV, O, A) de la remorque (2a, 2b, 2c) respective et provoquer l'émission d'un avertissement au conducteur de l'attelage de véhicules lorsque la comparaison montre que le déport réel (VAIst) de la remorque (2a, 2b, 2c) s'écarte (St4) du déport de consigne (VASoll) de la remorque (2a, 2b, 2c) de plus du déport maximal (VMax) défini.

19. Unité d'évaluation (10) selon la revendication 18, **caractérisée en ce que** l'unité d'évaluation (10) est agencée dans le véhicule tracteur (1a, 1b, 1c), de préférence dans un appareil de commande (11a) d'un système de stabilité (11).

20. Attelage de véhicules (100a, 100b, 100c) constitué d'un véhicule tracteur (1a, 1b, 1c) et d'au moins une remorque (2a, 2b, 2c) comportant un dispositif d'évaluation (10) selon la revendication 18 ou 19.

21. Attelage de véhicules (100a, 100b, 100c) selon la revendication 20,
**caractérisé en ce qu**'au moins une partie des grandeurs caractéristiques géométriques (gK, RSA, DL) et au moins une grandeur caractéristique réelle (nAL, nAR, nBL, nBR, GAIst) de dynamique de conduite de la remorque (2a, 2b, 2c), laquelle grandeur caractéristique réelle est mesurée dans la remorque (2a, 2b, 2c), peuvent être transmises de la remorque (2a, 2b, 2c) au dispositif d'évaluation (10) dans le véhicule tracteur (1a, 1b, 1c) par l'intermédiaire d'une interface de remorque (8) pour déterminer un comportement instable (IV, O, A) de la remorque (2a, 2b, 2c) en partant du véhicule tracteur (1).

22. Procédé permettant de stabiliser une remorque (2a, 2b, 2c) d'un attelage de véhicules (100a, 100b, 100c) à N éléments, en particulier conformément aux revendications 20 ou 21, constitué d'un véhicule tracteur (1a, 1b, 1c) et d'au moins une remorque (2a, 2b, 2c), comportant au moins les étapes suivantes :

- détermination d'un comportement instable (IV, A, O) de l'au moins une remorque (2a, 2b, 2c) dans un procédé conformément à l'une des revendications 1 à 17, et
- commande d'un système d'entraînement (20) et/ou d'un système de freinage (30A, 30Z) et/ou d'un système de direction (40A, 40B) dans le véhicule tracteur (1a, 1b, 1c) et/ou dans la remorque (2a, 2b, 2c) lorsqu'un comportement instable (IV, A, O) de l'au moins une remorque (2a, 2b, 2c) est présent, pour stabiliser la remorque (2a, 2b, 2c),
dans lequel la commande s'effectue en fonction de l'écart (dG, dV) déterminé de l'au moins une grandeur caractéristique réelle (GAIst, VAIst) de dynamique de conduite sous la forme du déport réel (VAIst) de la remorque (2a, 2b, 2c) respective par rapport à l'au moins une grandeur caractéristique de consigne (GASoll, VASoll) de dynamique de conduite déterminée sous la forme du déport de consigne (VASoll) de la remorque (2a, 2b, 2c) respective, et
- émission d'un avertissement (W) au conducteur pour provoquer une intervention manuelle par l'intermédiaire du système d'entraînement (20) et/ou du système de freinage (30A, 30Z) et/ou du système de direction (40A, 40B) dans le véhicule tracteur (1a, 1b, 1c) et/ou dans la remorque (2a, 2b, 2c) lorsque le déport réel (VAIst) de la remorque (2a, 2b, 2c) s'écarte (St4) du déport de consigne (VASoll) de la remorque (2a, 2b, 2c) de plus que le déport maximal (VMax) défini.

23. Procédé selon la revendication 22, **caractérisé en ce que** le système d'entraînement (20) et/ou le système de freinage (30A, 30Z) dans le véhicule tracteur (1a, 1b, 1c) et/ou dans la remorque (2a, 2b, 2c) sont commandés de telle sorte qu'en cas d'écart maximal (H, T) de la grandeur caractéristique réelle (GAIst, VAIst) de dynamique de conduite par rapport à la grandeur caractéristique de consigne (GASoll, VASoll) de dynamique de conduite, un effet de freinage (BW) est augmenté et, en cas d'écart minimal (X), un effet de freinage (BW) est réduit.

Fig. 1a

Fig. 1b

EP 3 849 861 B1

24

## Fig. 2

## Fig. 1c

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010087022 A
- US 9573589 B2
- EP 2773544 B1
- DE 102016105916 A1